# FASCICULE DE BREVET EUROPEEN

(11) **EP 3 079 791 B1**
(45) Date de publication et mention de la délivrance du brevet: **15.07.2020**
(21) Numéro de dépôt: 14827491.3
(22) Date de dépôt: 10.12.2014
(51) Int. Cl.: B01D 35/153, B01D 37/02

(54) **FILTRE À CARBURANT ET CARTOUCHE POUR UN TEL FILTRE AVEC RÉSERVOIR D'ADDITIF EMBARQUÉ.**
KRAFTSTOFFFILTER UND KASSETTE FÜR SOLCH EINEN FILTER MIT FAHRZEUGINTERNEM ADDITIVTANK
FUEL FILTER AND CARTRIDGE FOR SUCH A FILTER WITH AN ONBOARD ADDITIVE TANK

(30) Priorité: 12.12.2013 FR 1362532
(43) Date de publication de la demande: 19.10.2016
(73) Titulaire: SOGEFI FILTRATION, 78280 Guyancourt (FR); Rhodia Operations, 75009 Paris (FR)
(72) Inventeur: FALC'HON, Jean-Jacques, F-78140 Velizy Villacoublay (FR); GUILLON, Christophe, F-14500 Vire (FR); MONSALLIER, Guy, F-50400 Granville (FR); HARLE, Virginie, F-60300 Senlis (FR); LACARRIERE, Antoine, F-92110 Clichy (FR)
(74) Mandataire: Plasseraud IP
(86) Numéro de dépôt international: PCT/FR2014/053259
(87) Numéro de publication internationale: WO 2015/086995

(56) Documents cités:
- WO-A1-03/055810
- WO-A1-2012/104552
- US-A1- 2009 206 024
- US-A1- 2012 325 752

## Description

### DOMAINE TECHNIQUE DE L'INVENTION

La présente invention est relative aux filtres à carburant, et en particulier aux filtres à gazole du type comprenant une cartouche filtrante ainsi qu'un réservoir d'additif destiné au circuit à carburant.

### ARRIERE-PLAN TECHNOLOGIQUE DE L'INVENTION

Un filtre à carburant du genre précité comprend typiquement une entrée et une sortie de carburant, et permet, dans un circuit d'alimentation en gazole pour moteur diesel, de filtrer le gazole pour le débarrasser de ses impuretés. Le réservoir d'additif est logé dans le boîtier de filtre et contient un additif liquide améliorant la qualité du carburant et en particulier la distribution du carburant dans le moteur, des performances du fonctionnement du moteur, la stabilité du fonctionnement du moteur et/ou facilitant la régénération du filtre à particules. Ce genre d'additif liquide est typiquement utile pour améliorer la durabilité du moteur. Le document WO 2012/104552 décrit un tel type de filtre et des exemples non limitatifs d'additif liquide sont exposés notamment en fin de description de ce document.

Il est intéressant de pouvoir diffuser l'additif liquide sans avoir recours à des pompes doseuses de grande précision ni gérer une unité de calcul associée, afin de réduire le coût du dispositif de distribution d'additif.

Un avantage du mode de distribution décrit dans le document WO 2012/104552 est de pouvoir allonger l'autonomie du réservoir d'additif en limitant l'apport en additif ou même en l'arrêtant pour éviter, sous certaines conditions, une concentration excessive d'additif dans le carburant. Il permet en outre d'optimiser la concentration en additif dans le carburant afin de trouver un compromis entre la quantité nécessaire suffisante et une surconcentration pouvant réduire l'autonomie du réservoir d'additif et/ou avoir des répercussions négatives sur d'autres organes du véhicule, tel qu'un encrassement du filtre à particules. Pour cela, l'additif liquide est diffusé sous l'effet d'une différence de pression, cet additif étant placé dans une poche souple ou enveloppe interne à paroi mobile étanche et mis à une pression identique à celle du carburant placé à l'intérieur d'une enveloppe externe de l'enceinte d'additif. Typiquement, la différence de pression peut résulter d'une surpression exercée par le carburant ou d'une dépression à proximité d'un orifice de distribution du liquide d'additif.

Un ensemble combinant un élément filtrant et une enceinte d'additif est cependant relativement complexe à assembler, en particulier si l'on souhaite que cet ensemble forme une cartouche amovible qui se change d'un seul tenant. Il est ainsi délicat, pour l'utilisateur ou opérateur qui réalise la rechange, de déconnecter/connecter une telle cartouche du circuit de carburant, notamment pour les raisons suivantes :
- la connexion au circuit de diffusion doit se faire avec précision, le plus simplement et rapidement possible ;
- un contact entre la peau de l'utilisateur et l'additif liquide contenu dans le réservoir peut présenter des risques pour la santé de l'utilisateur.

Dans le document WO 2012/104552, il est requis que le réservoir d'additif soit agencé à l'intérieur d'un boîtier externe de cartouche amovible et typiquement au fond du boîtier externe. Cependant, il y a alors une perte de flexibilité dans l'architecture du filtre dans la mesure où la fixation du filtre sous le capot doit se faire par une tête de filtre (couvercle).

Par ailleurs, on connaît par le document US 2009/0206024 A1 des cartouches de type spin-on intégrant une fonction de diffusion d'additif. Egalement dans ce cas, il y a une perte de flexibilité dans l'architecture du filtre. De plus, le mode de diffusion par déformation progressive d'un matériau thermosensible ne permet pas d'éviter des fuites d'additif liquide, ce qui peut présenter des risques pour la santé de l'utilisateur qui réalise une opération de rechange.

### DESCRIPTION GENERALE DE L'INVENTION

La présente invention a pour but de proposer une cartouche pour filtre à carburant du type à réservoir d'additif liquide qui soit plus attractive pour la problématique d'installation dans l'environnement encombré d'un moteur à explosion d'un véhicule automobile.

A cet effet, il est proposé selon l'invention une cartouche filtrante coopérant dans un filtre à carburant (avec tout ou partie d'un boîtier de filtre), la cartouche filtrante étant telle que définie dans la revendication 1.

Grâce à ces dispositions, la partie de rechange peut être de conception simple et au moins une partie principale ou les deux parties du boîtier de filtre associé peuvent être conservées, avec l'avantage de pouvoir fixer le filtre au véhicule par l'une ou l'autre de ces deux parties. Le raccord externe auto-obturant est en outre avantageux pour éviter tout contact de l'additif liquide avec l'utilisateur lors des phases de rechange.

On comprend que l'expression « fermer automatiquement » signifie que la fermeture est obtenue sans délai significatif du point de vue de l'opérateur. Dès le désengagement (déconnexion) par rapport à la partie de boîtier associée, on obtient instantanément un état de fermeture.

Le terme « raccord » doit ici être compris comme un organe de liaison qui permet d'assurer la continuité entre deux parties différentes (initialement séparées). En particulier, il s'agit d'un raccord qui permet l'assemblage (sans fuite) avec une conduite ayant un embout de connexion complémentaire. Par conséquent, on comprend qu'un clapet mobile ne peut en aucun cas être assimilé à un tel raccord. Un tel raccord présente typiquement un bord annulaire saillant vers l'extérieur.

L'élément filtrant et le module d'additif définissent une unité adaptée pour être insérée d'un seul tenant à l'intérieur d'un boîtier de filtre à carburant (qui comprend typiquement un bol et un couvercle). La superposition et/ou emboîtement, avec typiquement un prolongement axial relatif entre le module d'additif et l'élément filtrant, rend la manipulation de la cartouche aisée. Les deux parties du boîtier de filtre associé peuvent être conservées.

La fonction de support exercée par l'élément filtrant facilite le chargement de la cartouche filtrante et peut limiter l'accès au conduit de sortie d'additif, en particulier lorsque ce dernier débouche dans l'espace intérieur défini par le média filtrant.

Selon une particularité, le média filtrant a une face interne qui délimite un espace intérieur, le module d'additif consistant en une enceinte d'additif qui comprend :
- une enveloppe externe délimitant autour du réservoir d'additif un volume périphérique et qui présente au moins un orifice de passage de carburant de façon à faire pénétrer du carburant dans le volume périphérique,
- le réservoir d'additif qui s'étend à l'intérieur de l'enveloppe externe et présente au moins une partie souple et étanche telle qu'une paroi mobile pour permettre de faire varier le volume interne,
sachant que le conduit de sortie d'additif liquide est distinct de l'orifice de passage de carburant et s'étend dans ou à proximité de l'espace intérieur en traversant l'extrémité de fixation. On comprend ainsi que le réservoir d'additif à paroi souple n'est pas accessible et le conduit de sortie (qui peut s'étendre à distance des extrémités de la cartouche) est protégé par le média filtrant.

Selon une autre particularité, la deuxième extrémité de l'élément filtrant comprend un flasque proximal par rapport à l'enceinte d'additif, l'extrémité de fixation de l'enceinte d'additif étant retenue par ce flasque proximal et/ou par un élément d'armature de l'élément filtrant qui s'étend dans l'espace intérieur. Ce type de retenue permet de réaliser une connexion fiable tout en limitant l'espacement entre l'élément filtrant et l'enceinte d'additif. L'intégrité du média filtrant est maintenue par l'utilisation du flasque proximal (qui est par exemple réalisé en matière plastique moulée) et de préférence aussi par l'élément d'armature qui peut entourer la zone de fixation avec le raccord externe, sachant que l'utilisation d'un flasque distal favorise aussi un maintien de l'intégrité du média filtrant.

Dans des modes de réalisation préférés de l'invention, on peut éventuellement avoir recours en outre à l'une et/ou à l'autre des dispositions suivantes :
- l'orifice de passage de carburant débouche dans ledit espace intérieur.
- l'extrémité de fixation de l'enceinte d'additif comprend une pièce annulaire (monobloc) qui s'étend autour du conduit de sortie d'additif liquide, la retenue étant réalisée par emboitement de ladite extrémité de fixation dans l'espace intérieur avec engagement de la pièce annulaire contre ou au-delà d'une butée appartenant à l'élément filtrant (l'assemblage est ainsi réalisé de manière simple et rapide et assure un positionnement correct de l'enceinte d'additif) ;
- l'enveloppe externe de l'enceinte d'additif est obtenue par liaison étanche de la pièce annulaire sur une cuve et présente une unique ouverture définie par le raccord externe, la pièce annulaire ayant une forme de dôme et comprenant un grand bord annulaire raccordé à la cuve et au moins un petit bord annulaire qui délimite un passage pour le raccord externe lorsque ce dernier est distinct et inséré au travers de la pièce annulaire ;
- le flasque proximal, de préférence monobloc, comprend une portion radiale qui recouvre une extrémité axiale du média filtrant, cette portion radiale ayant un format annulaire et délimitant une ouverture traversée par le raccord externe, et une portion d'extension distincte de la portion radiale, présentant une surface annulaire de guidage et/ou d'étanchéité en contact avec une portion de surface annulaire de l'extrémité de fixation (cette configuration du flasque proximal facilite l'assemblage tout en limitant l'espacement entre l'élément filtrant et le réservoir ; la portion d'extension peut en outre permettre de fixer ou maintenir la position de l'élément d'armature) ;
- la deuxième extrémité de l'élément filtrant comporte un flasque qui forme une partie de l'enveloppe externe et est relié de façon étanche à une cuve de l'enceinte d'additif ;
- le raccord externe comprend un corps rigide formé d'une pièce et définissant le conduit de sortie d'additif liquide, et au moins un organe mobile (en contact avec le corps rigide) tel qu'un clapet placé dans le conduit de sortie d'additif liquide, sachant que le réservoir d'additif comporte une paroi réalisée d'une pièce qui comprend le corps rigide ;
- les moyens d'obturation, par exemple sous la forme d'un dispositif auto-obturant, comprennent un clapet d'obturation, qui est de préférence sollicité par défaut dans une position de fermeture par un organe de rappel élastique tel qu'un ressort (cette configuration permet de minimiser l'encombrement du clapet dans le raccord externe, ce qui permet d'allonger le tronçon en engagement avec l'embout de connexion complémentaire qui fait partie du boîtier) ;
- les moyens d'obturation sont actionnables par poussée depuis l'extérieur pour obtenir une position d'ouverture ;
- la deuxième extrémité du raccord externe s'étend au-delà des moyens d'obturation (qui sont placés intérieurement dans le conduit de sortie d'additif, en retrait par rapport au débouché dans l'espace intérieur) ;
- l'élément filtrant présente un flasque additionnel distal par rapport à l'enceinte d'additif et formant une extrémité de cartouche, l'enceinte d'additif comprenant un fond rigide situé à l'opposé de ladite extrémité de cartouche, l'orifice de passage de carburant et la deuxième extrémité du raccord externe étant agencés dans l'enceinte d'additif à l'opposé du fond rigide et plus près du flasque proximal que du flasque distal.
- le flasque distal présente une ouverture centrale ayant un première diamètre interne (D1), le flasque proximal présentant une ouverture centrale ayant un deuxième diamètre interne (D2), l'enceinte d'additif définissant un diamètre externe maximal (D3) tel que :
   0,5 ≤ D1/D3 ≤ 1 et 0,5 ≤ D2/D3 ≤ 1
   (avec ces dispositions, la cartouche présente un encombrement optimisé limitant les dimensions du boîtier de filtre, et un volume cylindrique relativement large est disponible dans l'espace intérieur pour loger une électrovanne ou autre composant actionneur similaire pour la distribution de l'additif). Bien entendu, on peut en variante réduire le diamètre externe de l'enceinte d'additif, par exemple en logeant une partie du réservoir d'additif dans l'espace intérieur.

Par ailleurs, l'invention a également pour objet de proposer un filtre à carburant avec un réservoir d'additif embarqué et adapté pour optimiser la concentration en additif dans le carburant.

A cet effet, il est prévu un filtre à carburant comprenant une cartouche filtrante selon l'invention, et comprenant un boîtier pour loger la cartouche filtrante, le boîtier comprenant :
- au moins un orifice d'entrée de carburant ;
- au moins un orifice de sortie de carburant ;
- un orifice de distribution de l'additif liquide dans un circuit de circulation de carburant pour moteur à combustion interne, l'orifice de distribution d'additif étant distinct des orifices d'entrée et de sortie de carburant ; et
- une tête de diffusion qui comporte l'orifice de distribution pour diffuser l'additif dans le circuit de circulation de carburant, un embout de connexion adapté pour s'engager avec le raccord externe, et un canal de distribution permettant de faire circuler l'additif liquide de l'embout de connexion vers l'orifice de distribution, l'embout de connexion coopérant avec les moyens d'obturation de manière à ce que le canal de distribution communique avec le réservoir d'additif dans un état engagé de l'embout de connexion avec le raccord externe.

Selon une particularité, le boîtier est réalisé par assemblage avec un bol d'un couvercle qui comprend la tête de diffusion, la tête de diffusion étant destinée à être montée avec le couvercle, de préférence de manière permanente sur le circuit de circulation de carburant, le couvercle comportant l'orifice d'entrée et l'orifice de sortie de carburant, ladite cartouche étant montée de manière amovible sur le couvercle, le canal de distribution s'étendant dans l'espace intérieur (avec cette configuration, l'encombrement du couvercle est optimisé).

Selon une autre particularité, l'élément filtrant est interposé de façon étanche entre une zone d'amont autour de la cartouche filtrante, qui communique avec l'orifice d'entrée de carburant, et une zone d'aval qui inclut l'espace intérieur et communique avec l'orifice de sortie de carburant, l'extrémité de fixation du module d'additif étant en contact étanche radial contre une portion de surface annulaire du flasque proximal, à distance du raccord externe. Ainsi, il est permis d'acheminer du carburant filtré de manière centripète à l'intérieur de l'enceinte d'additif (ce qui maximise la surface de média filtrant du côté de la zone amont). De plus, le ou les orifices de passage de carburant respectifs de l'enceinte d'additif peuvent déboucher dans l'espace intérieur, de sorte que le carburant circulant autour du réservoir est filtré (le risque de rigidifier une paroi souple du réservoir par accumulation d'impuretés étant évité). Et lorsqu'on diffuse l'additif par utilisation de l'effet venturi, il est permis que la différence de pression au niveau du venturi soit constante au cours du temps (selon un débit donné de gazole entrant dans le filtre), ce qui n'est pas le cas si le carburant à l'intérieur de l'enceinte d'additif n'était pas filtré en raison de la perte de charge de l'élément filtrant qui augmenterait avec le temps (chargement de l'élément filtrant). On préfère ici éviter cette dérive et ne pas dépendre d'éventuelles fluctuations des différences de pression entre l'intérieur et l'extérieur du réservoir d'additif (différences de pression qui seraient différentes en fonction du temps pour un débit de carburant donné).

Selon une autre particularité, le filtre comprend un moyen de génération de différence de pression entre l'orifice d'entrée ou de sortie de carburant et l'orifice de distribution d'additif, et un dispositif d'obturation sélective totale ou partielle du canal de distribution, engagé dans l'espace intérieur.

Selon une autre particularité, il est prévu un dispositif de chauffage configuré pour chauffer l'additif en amont de l'orifice de distribution, de préférence entre l'embout de connexion et une entrée du canal de distribution.

Il est également proposé selon l'invention un kit d'assemblage d'une cartouche filtrante à carburant, ce kit comprenant :
- un élément filtrant du type à média filtrant annulaire s'étendant entre un premier flasque et un deuxième flasque ;
- une enceinte d'additif qui comporte une enveloppe au moins en partie souple formant réservoir d'additif liquide et une enveloppe externe pourvue d'au moins un orifice de passage de carburant afin qu'une partie souple du réservoir d'additif soit soumise à une pression de carburant ;
sachant que l'enceinte d'additif présente une extrémité de fixation pourvue d'un raccord externe et adaptée pour être fixée de manière étanche au travers du premier flasque de l'élément filtrant et insérée dans l'espace intérieur délimité par le média filtrant,
l'élément filtrant comprenant un passage d'accès au travers du deuxième flasque, ce passage d'accès s'étendant dans l'espace intérieur jusqu'à proximité du premier flasque pour permettre l'insertion de l'embout de connexion d'un composant de distribution d'additif jusqu'au raccord externe, sachant que le raccord externe comprend l'unique conduit de sortie d'additif liquide de l'enceinte d'additif et des moyens d'obturation pour fermer automatiquement de manière étanche le conduit de sortie d'additif liquide dans un état désengagé du raccord externe.

Selon une particularité, un ressort peut aussi être monté sur la cartouche du kit d'assemblage, typiquement à une extrémité axiale de cette cartouche, et/ou un joint peut être monté sur l'élément filtrant (par exemple sur le deuxième flasque qui est distal par rapport à l'enceinte d'additif).

Selon une particularité, l'orifice de passage de carburant débouche extérieurement du même côté que le conduit de sortie d'additif liquide, entre une zone de fixation et le raccord externe.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe d'un filtre à carburant avec une cartouche filtrante selon l'invention ;
- la figure 2 est une perspective éclatée du filtre de la figure 1 ;
- la figure 3 est une vue en coupe longitudinale d'une cartouche filtrante avec enceinte d'additif, utilisable dans le filtre de la figure 1 ;
- la figure 4 est une perspective éclatée illustrant la cartouche de la figure 3;
- la figure 5 illustre un détail d'une variante de cartouche filtrante, utilisable dans le filtre de la figure 1 ;
- la figure 6 illustre en détail le mode de fixation de l'enceinte d'additif, et également une variante de cartouche ;
- la figure 7 représente schématiquement une disposition possible du filtre avec fonction de distribution d'additif selon l'invention, dans un circuit de circulation de carburant pour moteur à combustion interne ;
- la figure 8 montre une vue schématique en coupe transversale de la cartouche filtrante, à l'interface entre l'extrémité de fixation et le flasque proximal ;
- les figures 9A et 9B montrent des parties de boîtier utilisables dans un mode de réalisation de l'invention.

### DESCRIPTION DES MODES DE REALISATION PREFERES DE L'INVENTION

Sur les différentes figures, des références identiques indiquent des éléments identiques ou similaires.

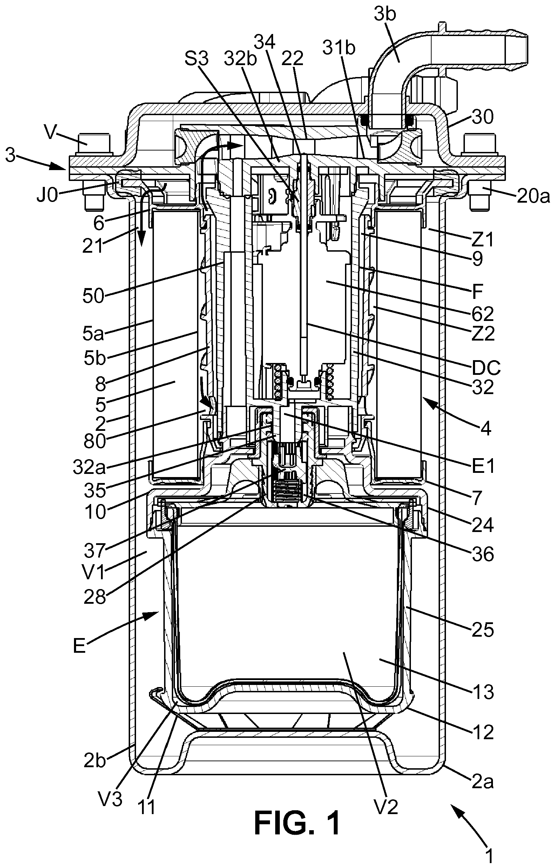

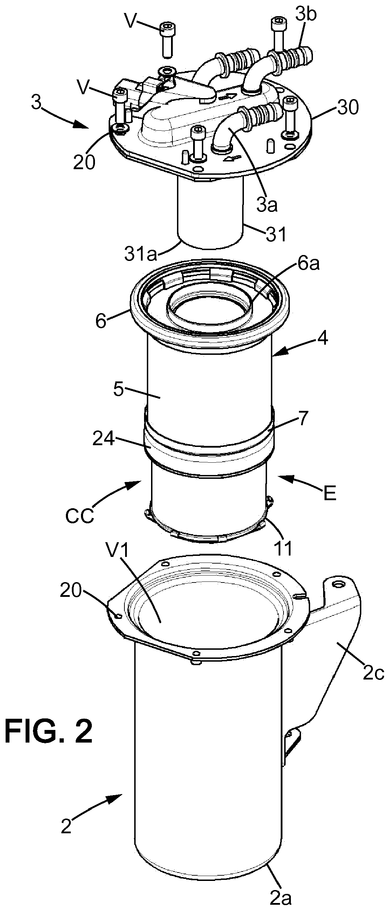

Les figures 1 et 2 représentent une forme de réalisation du filtre à carburant (gazole ou carburant similaire) qui embarque un module d'additif, de préférence sous la forme d'une enceinte d'additif E. Ce filtre 1 comprend un boîtier (2, 3) qui présente une paroi supérieure (ici formée par une paroi d'obturation 30) et une paroi inférieure. Dans l'exemple non limitatif des figures, la paroi inférieure du boîtier (2, 3) est formée par un bol 2 en métal ou en plastique. Le bol 2 présente un fond 2a à partir duquel s'étend vers le haut une paroi latérale 2b, ici sensiblement cylindrique et présentant un rebord supérieur directement solidaire d'un couvercle 3 formant la paroi supérieure du boîtier (2, 3). Ce couvercle 3 présente un bord qui est directement fixé sur le bord annulaire (ici circulaire) du bol 2. Plus généralement, on comprend que le couvercle 3 est relié de manière étanche au bol 2. Dans la configuration particulière et non limitative de la figure 1, il n'y a pas d'étanchéité directe entre le bol 2 et le couvercle 3 mais une étanchéité est tout de même obtenue par le joint J0 qui est sur le flasque 6. Ainsi, on peut s'assurer que le joint J0 sera changé lors de la rechange car il est ici lié à l'élément filtrant 4. Dans d'autres configurations, un joint peut être directement monté entre le bol 2 et le couvercle 3 sans faire intervenir une tierce pièce.

Le bord du couvercle 3 peut être par exemple vissé sur le bord du bol 2 à l'aide de plusieurs vis V traversant des trous 20 et engagées dans des écrous 20a, ou par l'intermédiaire d'un filetage périphérique, de façon connue en soi.

Comme illustré sur la figure 2, ce couvercle 3 présente un orifice d'entrée 3a de carburant à filtrer ainsi qu'un orifice de sortie 3b de carburant filtré pour permettre la circulation et la filtration du carburant à l'intérieur du filtre 1. Le boîtier (2, 3) est raccordable de façon interchangeable à des conduites d'un système d'alimentation en carburant d'un véhicule à moteur à combustion. Dans cet exemple, le couvercle 3 forme une tête de filtre à section en "T" et comprend :
- une partie d'obturation 30 qui s'étend transversalement au-dessus du bol 2 et qui peut incorporer l'orifice d'entrée 3a de carburant brut et l'orifice de sortie 3b de carburant filtré ; et
- une partie d'insertion 31 qui s'étend longitudinalement entre une extrémité inférieure 31a et une extrémité supérieure 31b de raccordement à la partie d'obturation 30.

Le boîtier formé par le bol 2 et le couvercle 3 délimite un volume intérieur V1 dans lequel est disposé l'enceinte d'additif E (ou plus généralement un module d'additif pourvu du réservoir 13) ainsi qu'un élément filtrant 4 de forme annulaire qui s'étend suivant un axe longitudinal A. Cet axe longitudinal A est de préférence un axe central de révolution de l'élément filtrant 4 et éventuellement correspond aussi à un axe central de l'enceinte d'additif E. L'élément filtrant 4 présente ici un média filtrant 5, un premier flasque distant de l'enceinte d'additif E et appelé dans ce qui suit flasque distal 6, un deuxième flasque proche de l'enceinte d'additif E et appelé dans ce qui suit flasque proximal 7. Le média filtrant 5 s'étend de préférence autour de l'axe longitudinal A qui peut éventuellement coïncider avec l'axe de révolution du bol 2 lorsque la paroi 2b est par exemple cylindrique. L'élément filtrant 4 peut comporter optionnellement un élément d'armature 8 ou une structure interne de liaison entre les deux flasques 6, 7. L'élément d'armature 8 a ici une forme sensiblement tubulaire qui rigidifie l'élément filtrant 4 et qui peut permettre de canaliser du carburant. L'élément d'armature 8 s'étend ici entre le flasque distal 6 (flasque supérieur sur la figure 1) et le flasque proximal 7 (flasque inférieur sur la figure 1).

Bien entendu, d'autres formes de réalisation de l'élément filtrant 4 peuvent être utilisées, par exemple avec seulement le flasque proximal 7 ou sans aucun flasque axial, l'élément d'armature 8 pouvant dans ce cas être maintenu en position par un contact avec la face interne 5b du média filtrant 5. Il est également possible d'avoir une configuration sans élément d'armature 8.

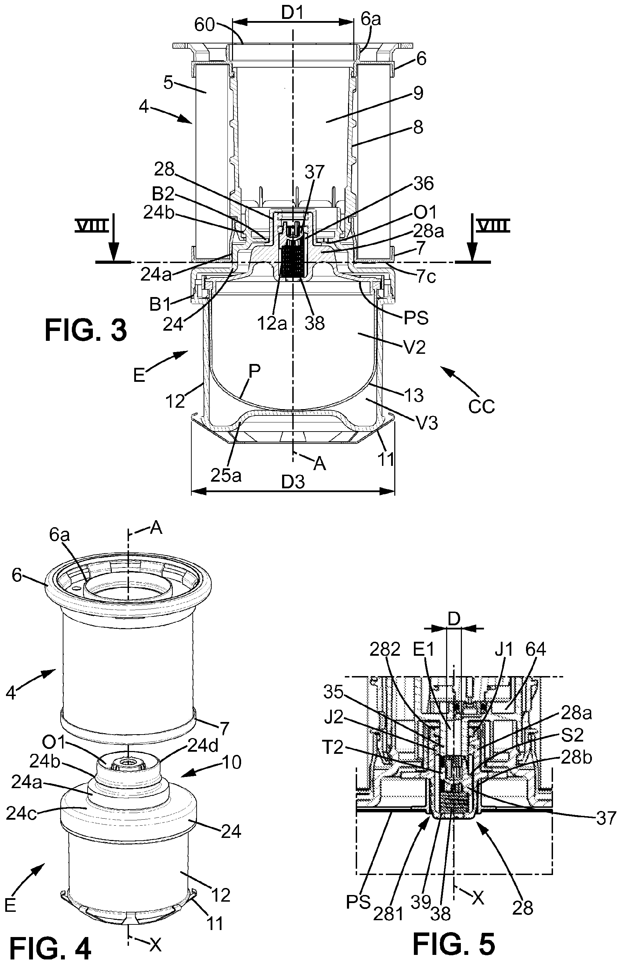

Dans l'exemple non limitatif illustré, l'élément filtrant 4 et le module d'additif, ici l'enceinte d'additif E, sont agencés de façon superposée et sont fixés l'un à l'autre pour définir une cartouche combinée filtrante CC bien visible sur les figures 2 et 3. Cette cartouche CC s'étend par exemple longitudinalement depuis le fond de l'enceinte d'additif E, optionnellement pourvu d'un ressort 11, jusqu'au flasque distal 6, optionnellement pourvu d'un joint J0 (faisant l'étanchéité entre le couvercle 3 et le bol 2), qui forme une extrémité de cartouche, comme illustré sur la figure 2. Dans la cartouche combinée filtrante CC, un espace intérieur 9 est délimité par la face interne 5b du média filtrant 5. Le module d'additif, ici formé par l'enceinte d'additif E, présente une extrémité de fixation 10 qui peut s'insérer en partie dans l'espace intérieur 9 et permet un accrochage au flasque proximal 7 et/ou à l'élément d'armature 8 de l'élément filtrant 4. L'extrémité de fixation 10 peut en outre être en contact étanche, par exemple avec un contact annulaire radial, contre une portion tubulaire du flasque proximal 7. Dans une option rendant le module d'additif inséparable de l'élément filtrant 4, on peut rendre le flasque proximal 7 solidaire ou intégré dans l'extrémité de fixation 10.

Alternativement, l'extrémité de fixation 10 peut s'étendre en dessous de l'espace intérieur 9 et se raccorder de manière étanche à la portion radiale 7c (recouvrant l'extrémité axiale 5c inférieure du média filtrant 5) du flasque proximal 7.

Bien que la description qui suit se réfère à un réservoir d'additif 13 faisant partie d'une enceinte d'additif E du type comprenant une enveloppe externe 12 fermée du côté opposé à l'extrémité de fixation 10, il doit être compris qu'on peut utiliser d'autres configurations du réservoir 13 dans un module d'additif. Par exemple, une paroi P du réservoir 13 peut être en contact direct avec du carburant situé à proximité du fond 2a du boîtier (2, 3) et l'enveloppe externe 12 peut être remplacée par une structure ajourée ou pourvue d'orifices de passage de façon à mettre le réservoir 13 sous une pression de carburant. On comprend ainsi que la structure externe du module d'additif peut simplement comporter des éléments rigides et l'extrémité de fixation 10 qui s'engage de préférence dans l'espace intérieur 9.

La cartouche combinée filtrante CC correspond à une unité pouvant être insérée d'un seul tenant à l'intérieur du boîtier (2, 3). La cartouche CC comprend une extrémité adaptée pour buter contre le fond 2a du bol 2 et présentant optionnellement un ressort 11 raccordé à l'enveloppe externe 12 de l'enceinte d'additif E, ou solidaire du fond 2a. La cartouche CC est montée de manière amovible sur le couvercle 3. Un raccordement étanche peut être prévu entre une portion saillante du flasque distal 6 ou un joint associé et une surface annulaire d'étanchéité formé du côté de la face intérieure de la partie d'obturation 30. Alternativement le raccordement étanche peut être réalisé par le contact d'une lèvre d'étanchéité de l'élément filtrant 4 contre une surface annulaire périphérique de la partie d'insertion 31. Plus généralement, un contact étanche annulaire est obtenu de façon à ce que le couvercle 3 et l'élément filtrant 4 délimitent (dans la configuration montée de la cartouche CC) une zone Z1 en amont de la filtration qui communique avec l'orifice d'entrée 3a et une zone Z2 en aval de la filtration qui communique avec l'orifice de sortie 3b.

Du fait du caractère amovible de la cartouche CC, le bol 2 et le couvercle 3 constituent des parties réutilisables. L'une ou l'autre de ces parties peut être raccordée au véhicule par une interface de fixation. Dans l'exemple non limitatif de la figure 2, on peut voir que le bol 2 comprend au moins une extension latérale 2C qui permet une telle fixation. Pour des raisons d'ergonomie, la partie d'obturation 30 du couvercle 3 peut être relativement aplatie et dépourvue d'organe actionneur pour commander la diffusion d'additif. De plus, on peut loger au moins une partie du réservoir d'additif 13 dans l'espace intérieur 9.

Comme illustré à la figure 1, le couvercle 3 intègre une tête de diffusion 32 de l'additif liquide. Cette tête de diffusion 32 appartient à la partie d'insertion 31 et s'étend de façon parallèle à l'axe longitudinal A entre :
- une première extrémité axiale 32a incluant une entrée d'additif E1 qui communique avec l'intérieur du réservoir d'additif 13 de l'enceinte d'additif E ; et
- une deuxième extrémité axiale 32b pourvue d'un orifice de distribution 34 de l'additif liquide qui débouche dans la sortie 3b de carburant.

On comprend que la tête de diffusion 32, qui comporte l'orifice de distribution 34 pour diffuser l'additif dans un circuit C1 de circulation de carburant, inclut un canal de distribution DC permettant de faire circuler l'additif liquide de l'entrée d'additif E1 vers l'orifice de distribution 34. L'entrée d'additif E1 peut être définie par un embout de connexion 35 qui forme une partie de la première extrémité axiale 32a. L'embout de connexion 35 est par exemple de type mâle et a une forme tubulaire comme illustré sur la figure 5.

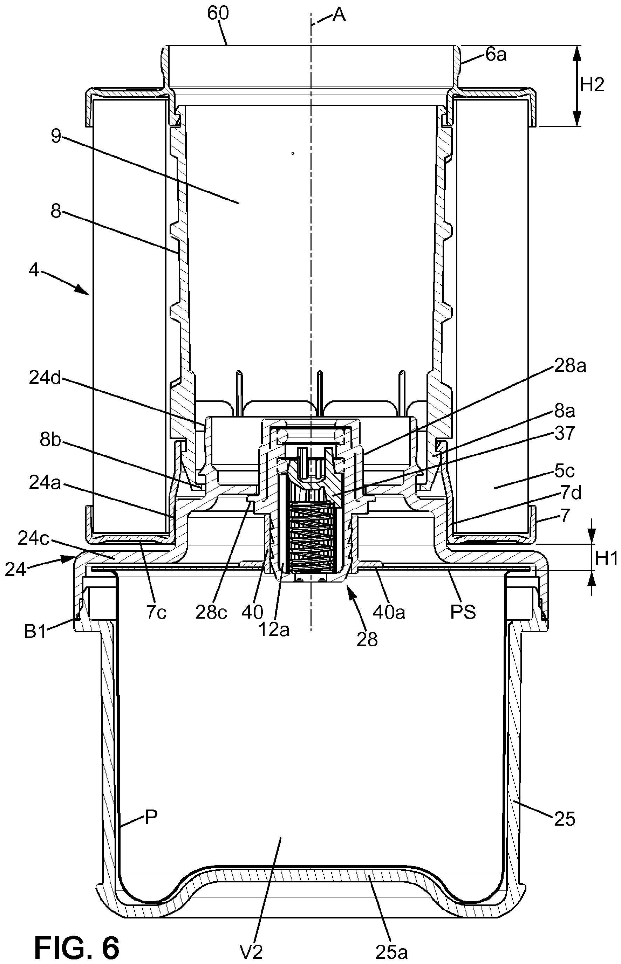

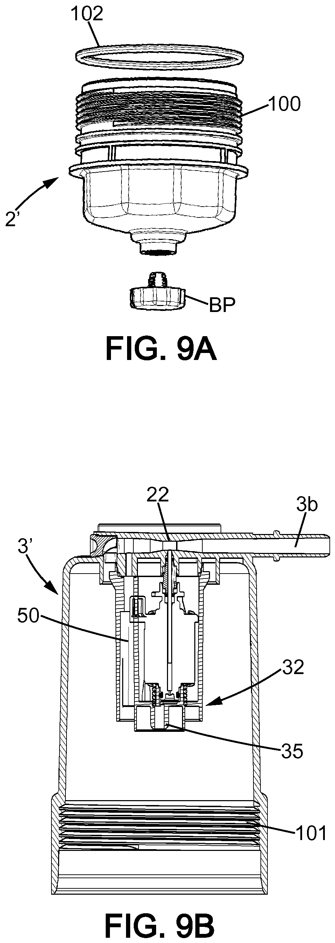

Dans le mode de réalisation des figures 9A et 9B, la cartouche CC peut se démonter par le bas, la tête de diffusion 32 restant fixe par rapport au véhicule automobile lors de la rechange. Dans cet exemple, le bol 2 est remplacé par un élément amovible 2' qui peut présenter un bouchon de purge BP. L'eau pouvant être séparée à l'aide de l'élément filtrant 4 peut être sélectivement retirée à l'aide de ce bouchon de purge BP. Le filetage 100 de cet élément amovible 2' coopère avec le filetage 101 de l'élément d'enveloppe 3' et un joint annulaire 102 garantit l'étanchéité de la fixation du boîtier de filtre. On comprend que dans ce type de boîtier de filtre, la cartouche CC montrée sur les figures 3-4 ou celle montrée sur la figure 6 peut être montée de façon identique et fonctionner comme avec le boîtier montré sur les figures 1-2.

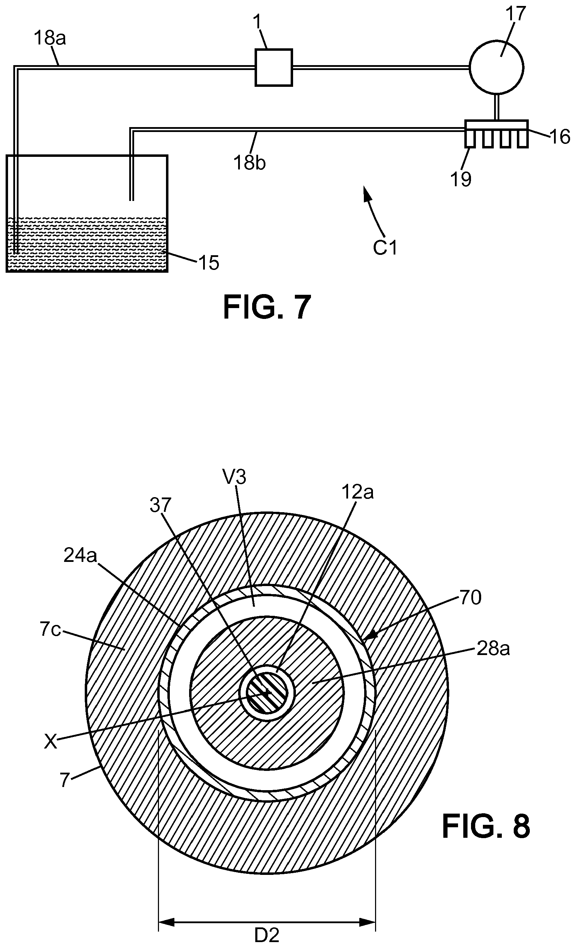

En référence à la figure 7, un exemple d'intégration du filtre 1 dans un circuit de carburant va à présent être brièvement décrit.

La figure 7 représente schématiquement un circuit C1 de circulation de carburant pour moteur à combustion interne avec un filtre à carburant 1. Classiquement, le circuit C1 de circulation de carburant est disposé entre un réservoir 15 de carburant et la rampe haute pression 16 (également appelée « common rail ») et assure la circulation du carburant entre l'intérieur du réservoir 15 et la rampe haute pression 16. Le circuit d'alimentation comporte ici le filtre 1 qui est destiné à filtrer le carburant et une pompe haute pression 17. La pompe haute pression 17 et la rampe haute pression 16 constituent le système d'injection du carburant. Un premier conduit 18a, dit « ligne d'alimentation », assure la circulation de carburant depuis l'intérieur du réservoir 15 vers la rampe haute pression 16 et un second conduit 18b, dit « ligne retour » assure la circulation de carburant depuis le système d'injection jusqu'à l'intérieur du réservoir 15. Le carburant est donc pompé dans le réservoir 15, puis filtré dans le filtre 1 et envoyé sous pression, par l'intermédiaire de la pompe 17, dans la rampe haute pression 16 puis une partie est dirigée vers les injecteurs 19 du moteur et une autre partie retournée jusqu'à l'intérieur du réservoir 15 par la ligne retour 18b. Une partie du carburant peut également être envoyée de la pompe haute pression 17 vers la ligne retour 18b.

Du fait de la configuration de la cartouche CC dans le filtre 1 avec raccordement de l'enceinte d'additif E à la tête de diffusion 32, le circuit C1 de circulation de carburant fait également circuler l'additif liquide en direction de la rampe haute pression 19. Dans un mode de réalisation préféré, le filtre 1 présente un orifice de distribution 34 débouchant sur la ligne d'alimentation 18a, comme indiqué sur la figure 7. Cependant, on peut aussi prévoir que l'orifice de distribution 34 débouche dans une conduite différente, par exemple pour diffuser de l'additif liquide dans la ligne retour 18b.

Un exemple de circulation du carburant dans le filtre 1 va à présent être décrit en référence aux figures 1 et 2.

Le carburant brut qui provient typiquement du réservoir à carburant 15 est introduit dans le boîtier (2, 3) par l'orifice d'entrée 3a et est acheminé dans le volume intérieur V1 dans un espace annulaire 21 de la zone d'amont Z1 formé autour de la cartouche CC et qui est délimité notamment par la face externe 5a du média filtrant 5. Le carburant à filtrer, par exemple du gazole, peut passer à travers le média filtrant 5 qui retient les impuretés notamment solides et éventuellement l'eau (par exemple si une toile hydrophobe est ajoutée ou si l'élément d'armature 8 comprend un tube de séparation d'eau avec toile hydrophobe surmoulée). Le média filtrant 5 peut être d'un genre connu en soi et ne sera pas davantage décrit ici.

Après la traversée du média filtrant 5, le carburant filtré peut circuler dans l'espace intérieur 9 le long de la face interne 5a, par exemple de façon descendante en étant canalisé par des reliefs en hélice de l'élément d'armature 8. Après avoir traversé l'élément d'armature 8 via des ouvertures (ici des ouvertures inférieures 80), le carburant filtré peut circuler (ici de façon ascendante) autour et le long de la partie d'insertion 31 pour rejoindre l'orifice de sortie 3b. Dans l'exemple de réalisation de la figure 1, on voit qu'un venturi 22 est situé entre les orifices d'entrée et de sortie 3a-3b du carburant, de façon à réaliser une dépression locale en amont de l'orifice de sortie 3b. Dans cet exemple, le carburant filtré passe dans le venturi 22 qui est conçu selon une direction qui est transversale, et de préférence perpendiculaire à l'axe longitudinal A.

Le venturi 22 est agencé dans la partie d'obturation 30 du couvercle 3 et l'orifice de distribution 34 débouche dans la zone de rétrécissement du venturi 22. Ainsi le venturi 22 forme un moyen de génération d'une différence de pression entre l'un des orifices d'entrée 3a ou de sortie 3b de carburant et l'orifice de distribution 34. Dans l'exemple illustré, l'orifice de distribution 34 est proche de l'orifice de sortie 3b, de sorte que l'additif liquide se mélange dans le carburant filtré et dans une partie de la zone d'aval Z2 situé complètement en dehors du bol 2.

Des exemples de configuration de l'enceinte d'additif E avec connexion à l'élément filtrant 4 et à la partie d'insertion 31 du couvercle 3 vont à présent être décrit en référence aux figures 1 à 6.

L'enceinte d'additif E présente ici une enveloppe externe 12 qui peut être obtenue par liaison étanche d'une pièce annulaire 24 sur une cuve 25 distincte du bol 2. La cuve 25 et la pièce annulaire 24 peuvent être rigides. Cette configuration avec une enveloppe externe 12 permet d'une part de protéger l'intégrité et l'étanchéité du réservoir 13 qui est au moins en partie souple, et d'autre part de faciliter la connexion et l'assemblage avec l'élément filtrant 4, par exemple par utilisation de surfaces de guidage et/ou d'accrochage 24a formées sur la pièce annulaire 24. Ceci permet également de s'assurer que le carburant autour du réservoir d'additif 13 est propre.

Au travers de cette enveloppe externe 12, il est prévu un conduit de sortie d'additif liquide 12a, de préférence unique, qui est défini par un raccord externe 28. L'enveloppe externe 12 comporte au moins un orifice O1 de passage de carburant de façon à faire pénétrer du carburant à l'intérieur de l'enceinte d'additif E, autour du réservoir 13. Comme visible sur les figures 1 et 3, le réservoir 13 peut être composé d'une paroi P étanche flexible, ici en forme de bol, et d'une paroi supérieure PS, de préférence rigide dans sa partie centrale. Le réservoir 13 s'étend à l'intérieur de l'enveloppe externe 12 et la paroi P est mobile et étanche entre le volume interne V2 du réservoir 13 et un volume périphérique V3 délimité par l'enveloppe externe 12. On comprend que cette paroi P assure d'une part une séparation étanche et d'autre part maintient une pression identique entre l'additif dans le réservoir 13 et le carburant dans l'enceinte d'additif E.

Bien que les figures illustrent le cas d'une enveloppe externe 12 avec une cuve 25 distincte du bol 2, on peut aussi utiliser en alternative une cuve 25 qui définit une extrémité du boîtier de filtre, ce qui permet de supprimer le bol 2. La cuve 25 présente alors une interface de liaison qui peut être fixée, par exemple par vissage, sur le couvercle 3 (avec un filetage pouvant être similaire à ce qui est illustré sur la figure 9A). Dans une telle option, on peut conserver la pièce annulaire 24 identique ou similaire à l'exemple des figures 1-6. Eventuellement, on peut aussi remplacer le flasque proximal 7 et la pièce annulaire 24 par une seule pièce.

Dans l'exemple de la figure 3, la paroi supérieure PS comprend le raccord externe 28 et s'étend transversalement par rapport à l'axe longitudinal A. Le bord externe de la paroi supérieure PS est de préférence non déformable et fixe par rapport à l'enveloppe externe 12 et permet de maintenir une forme annulaire de large diamètre pour la partie supérieure de la paroi P. Le réservoir 13 est ainsi déformable et assimilable à une poche souple et peut se vider par poussée ascendante sur la paroi P sans création de volume mort. La matière de la paroi P peut être de type membrane déformable éventuellement en élastomère (un élastomère fluoré) à titre d'exemple non limitatif. Le mode de fixation de la membrane est d'un type connu en soi, par exemple en coinçant de façon étanche le bord de membrane. Le fond 25a rigide de la cuve 25 peut être optionnellement en contact avec le fond souple du réservoir 13 à l'état rempli de ce dernier, comme cela est visible sur la figure 3. Dans l'exemple de la figure 6, il faut noter que la membrane formant la paroi P est formée par un plastique souple non élastomère. La paroi P peut alors être composée d'un film plastique (film dont l'épaisseur peut être inférieure à 900 µm).

De préférence, le raccord externe 28 s'étend de façon globalement tubulaire pour délimiter le conduit de sortie 12a et comporte des moyens d'obturation 36 pour fermer automatiquement de manière étanche le conduit de sortie 12a dans un état désengagé du raccord externe 28, c'est-à-dire lorsque celui-ci n'est pas connecté à l'embout de connexion 35 formé sur l'extrémité axiale 32a de la tête de diffusion 32. L'embout de connexion 35 coopère, ici en s'engageant dans le conduit de sortie 12a, avec les moyens d'obturation 36 de manière à ce que le canal de distribution DC communique avec l'intérieur du réservoir d'additif 13 dans un état engagé de l'embout de connexion 35 avec le raccord externe 28. On peut prévoir que le raccord externe 28 est légèrement flottant sur la pièce annulaire 24 (i.e. avec une possibilité de faible mouvement axial, typiquement sur une distance inférieure ou égale à 5 mm) pour favoriser le montage et limiter l'usure des composants internes au raccord externe 28, sachant qu'une telle usure peut parfois créer des fuites de l'additif.

Dans des variantes de réalisation pour lesquelles le flasque proximal 7 et la pièce annulaire 24 sont remplacées par une pièce unique, on comprend que le média filtrant 5 peut être collé de façon classique sur une telle pièce unique (qui cumule les fonctions de flasque et de paroi étanche de l'enveloppe externe 12). On peut par exemple souder cette pièce unique sur la cuve 25 avant collage du média filtrant 5.

En référence aux figures 3 et 5, le raccord externe 28 de type auto-obturant comprend un corps ou une portion tubulaire 28a avec deux ouvertures opposées, définissant un axe de passage X qui peut être parallèle et éventuellement confondu avec l'axe longitudinal A. Dans la position d'engagement de l'embout de connexion 35 dans le raccord externe 28, l'élément filtrant 4 et l'enceinte d'additif E sont dans une configuration superposée et les moyens d'obturation 36 sont agencés pour permettre la communication d'additif liquide à travers le conduit de sortie 12a. L'embout de connexion 35 s'étend alors à distance de la première extrémité 281 du raccord externe 28, c'est-à-dire à distance du débouché du conduit de sortie 12a dans le volume interne V2 du réservoir d'additif 13, et vient en prise avec les moyens d'obturation 36. Du côté de la deuxième extrémité 282 du raccord externe 28 (extrémité 282 formant organe femelle et correspondant ici au débouché du conduit de sortie d'additif 12a dans l'espace intérieur 9), au moins un contact radial étanche est réalisé entre la face externe latérale de l'embout de connexion 35 et un ou plusieurs joints annulaires J1, J2 montés intérieurement dans le corps tubulaire 28a.

Dans l'exemple des figures 5 et 6, le corps tubulaire 28a du raccord externe 28 traverse ici la paroi supérieure PS et présente sur sa face latérale des projections externes annulaires formant des collerettes circonférentielles 28b de section triangulaire, à la manière d'un sapin. Le corps tubulaire 28a est partiellement introduit dans un embout 40 en matière plastique formant partie du réservoir 13. Cet embout 40, qui est typiquement soudé sur la paroi supérieure PS, est axialement saillant vers l'extérieur par rapport à la paroi supérieure PS du réservoir 13 destiné à l'additif liquide. Cet embout 40 délimite une section de passage préférentiellement constante pour coopérer avec l'extrémité 281, ici en forme de sapin. Les collerettes circonférentielles 28b permettent de déformer le matériau souple constitutif de l'embout 40, formant autant d'étanchéités qu'il y a de collerettes 28b consécutives en contact avec l'embout 40. Une zone de soudure 40a est définie entre la paroi supérieure PS et la face inférieure d'un rebord de l'embout 40. Cette zone de soudure 40a s'étend perpendiculairement à l'axe A.

Dans une variante avec le même genre d'embout 40, l'extrémité 281 peut présenter une gorge annulaire externe dans laquelle est reçu un joint torique. Dans ce cas un blocage de l'extrémité 281 peut être réalisé par l'engagement d'organes de retenue répartis sur la face intérieure de l'embout 40 et sur l'extrémité 281. Il s'agit par exemple d'encoche(s) complémentaire(s) d'élément(s) radialement saillant(s) formés dans la partie inférieure de l'embout 40.

A l'intérieur du corps tubulaire 28a, le long de l'axe X, un clapet 37 qui est monté coulissant permet d'obturer le conduit de sortie 12a. Le clapet 37, qui fait partie des moyens d'obturation 36, est sollicité vers une position de fermeture par un organe de rappel élastique 38 tel qu'un ressort. La fermeture étanche est obtenue par exemple du fait que le joint annulaire J2 forme une butée pour une surface axiale S2 situé en périphérie du clapet 37. Une portion tubulaire T2 du clapet 37 peut alors venir en contact radial contre le joint J2 lorsque l'organe de rappel élastique 38 n'est plus soumis à une force de contrainte (cette force de contrainte s'exerçant ou non en fonction du positionnement de la cartouche CC dans le filtre 1). Cet organe de rappel élastique 38 est par exemple formé par un ressort en appui sur un siège 39 formé dans la première extrémité 281. Lorsque l'embout de connexion 35 est retiré, on comprend que le clapet 37 est déplacé, ici par poussée d'un ressort, jusqu'à venir en contact avec ce type de butée pour occuper une position de fermeture dans laquelle il obture totalement le conduit de sortie 12a pour l'additif liquide (comme illustré sur les figures 3 et 6).

Dans l'exemple non limitatif des figures 3 et 5, l'état d'ouverture des moyens d'obturation 36 s'obtient par une poussée du clapet 37 exercée par l'embout de connexion 35 qui est ici creux pour faire communiquer le réservoir d'additif 13 avec l'espace intérieur 9. L'insertion de l'embout de connexion 35 correspond à l'état monté de la cartouche CC sur le couvercle 3, dans une configuration de fixation entre le bol 2 et le couvercle 3, comme illustré à la figure 1. On comprend ainsi, comme bien visible sur les figures 3, 5 et 6, que le clapet 37 ou plus généralement les moyens d'obturation 36 du raccord externe 28 sont actionnables mécaniquement (ici par poussée), indépendamment de la température. Cela permet de simplifier la conception du raccord externe 28. Préférentiellement, uniquement un clapet 37 peut être utilisé dans la cartouche filtrante CC.

Bien entendu, les moyens d'obturation 36 peuvent se présenter sous d'autres formes alternatives. Ainsi, le clapet 37 des moyens d'obturation 36 n'est pas forcément en contact étanche radial avec le corps tubulaire 28a et peut se présenter sous la forme d'une bille ou d'un piston venant obturer un orifice de passage avec une étanchéité axiale. Lorsque l'on utilise au moins deux joints J1, J2 dans le raccord externe 28, on peut prévoir que ces joints J1, J2 sont chacun efficace dans une plage donnée de température qui peut être différente. A titre d'exemple nullement limitatif, l'étanchéité peut être améliorée en répartissant deux joints J1, J2 sur une distance axiale optionnellement au moins égale au diamètre interne D de l'entrée E1 définie par l'embout de connexion 35.

Dans l'exemple de la figure 3, la conception de la paroi supérieure PS est différente, de sorte qu'elle inclut le corps tubulaire 28a du raccord externe 28 (il s'agit d'une seule pièce de moulage). Avec cette configuration, la chaine de cotes de positionnement de l'embout de connexion 35 par rapport à l'enceinte d'additif E est plus courte. Ainsi, on n'additionne pas les tolérances d'exécution de pièces intermédiaires pour assurer la précision de positionnement de la première extrémité axiale 32a de la tête de diffusion 32.

Le flasque distal 6 présente une ouverture centrale 60 ayant un premier diamètre interne D1 qui peut être inférieure ou sensiblement égal au diamètre maximal D3 de l'enceinte d'additif E (ici au moins aussi large que le flasque distal 6 dans l'exemple des figures 1-6) mais supérieur au diamètre (ou diamètre équivalent) de la partie insérable 31 pour permettre l'engagement de cette dernière dans l'espace intérieur 9 lors de l'étape de connexion de la tête de diffusion 32. Pour permettre l'assemblage de la cartouche filtrante CC, on comprend que le flasque proximal 7 présente une ouverture centrale 70 ayant un deuxième diamètre interne D2 de dimensions similaires au premier diamètre interne D1. Afin d'optimiser le remplissage du boîtier et réduire l'encombrement global du filtre 1, la relation suivante peut alors être satisfaite pour ces diamètres :
0,5 ≤ D1/D3 ≤ 1 et 0,5 ≤ D2/D3 ≤ 1

Selon une particularité, lorsque la cartouche CC n'est pas encore installée dans le boîtier de filtre, un bouchon (non représenté) est prévu sur la partie supérieure formée par le flasque distal 6 afin d'éviter un encrassement du raccord externe 28 et du volume périphérique V3. Ce bouchon peut obturer l'ouverture 60 (visible notamment sur la figure 3) qui permet l'accès à l'espace intérieur 9 au travers du flasque distal 6.

Comme illustré sur la figure 4, il est en pratique avantageux que l'extrémité de fixation 10 de l'enceinte d'additif E présente une symétrie de révolution, afin de faciliter l'assemblage avec l'élément filtrant 4. Dans ce cas, l'axe de passage X défini par le corps tubulaire 28a est confondu avec l'axe longitudinal A de l'élément filtrant 4. La figure 8 illustre également, dans le plan de la portion radiale 7c du flasque proximal 7, la symétrie de révolution de l'extrémité de fixation 10. Cependant, on comprend que l'axe de passage X peut être décalé latéralement par rapport à l'axe central de la pièce annulaire 24, l'embout de connexion 35 étant alors décalé de façon correspondante par rapport à l'axe longitudinal A lorsque la cartouche filtrante CC est engagée avec la partie d'insertion 31 du couvercle 3. La position angulaire correcte peut être obtenue facilement dans ce cas par utilisation de moyens de guidage et/ou par un indicateur de positionnement (marquage) placés sur le flasque distal 6.

En référence aux figures 3-4 et 8, la pièce annulaire 24 de l'enveloppe externe 12 comprend l'extrémité de fixation 10 et une portion radiale 24c qui s'étend parallèlement à la portion radiale 7c du flasque proximal 7. L'extrémité de fixation 10 s'étend au travers de l'ouverture 70 définie par la portion radiale 7c (cette portion 7c ayant une forme annulaire). Le raccord externe 28 peut traverser également cette ouverture 70. Dans cet exemple non limitatif l'extrémité de fixation 10 est en saillie axiale par rapport à la portion radiale 24c et entoure le corps tubulaire 28a du raccord externe 28 (ce dernier s'étendant ainsi à distance radiale de face interne 5b du média filtrant 5, du flasque proximal 7 et de l'éventuel élément d'armature 8).

Comme cela est visible sur la figure 3, l'extrémité de fixation 10 s'étend le long du flasque proximal 7 et permet d'accrocher l'enceinte d'additif E à l'élément filtrant 4. L'extrémité de fixation 10 comporte une lèvre d'étanchéité 24d ou un bourrelet à proximité d'un bord libre. Cette lèvre d'étanchéité 24d est destinée à former une zone annulaire de contact étanche, de préférence un contact radial, avec une surface interne annulaire correspondante de l'extrémité inférieure 31a qui s'insère dans l'espace intérieur 9 jusqu'à proximité du flasque proximal 7. Alternativement, le bourrelet ou lèvre analogue d'étanchéité peut être alternativement formé à l'extrémité de la partie d'insertion 31 pour coopérer avec une surface annulaire de l'extrémité de fixation 10.

L'extrémité de fixation 10 comporte en outre une portion de surface annulaire de guidage et d'étanchéité 24a (ici une portée cylindrique) qui s'étend de façon annulaire depuis une zone de jonction avec la portion radiale 24c de la pièce annulaire 24. Le flasque proximal 7 comporte, sur une portion d'extension axiale reliée au bord interne de la portion radiale 7c, une surface annulaire 7d continue qui est en contact annulaire étanche avec la portion de surface 24a dans la cartouche CC.

De façon similaire, le flasque distal 6 comporte une lèvre d'étanchéité 6a qui est en contact étanche avec une surface continue correspondante de la portion d'obturation 30 (par exemple au niveau d'une tubulure). Grâce à ces deux zones d'étanchéité au niveau des flasques 6 et 7, l'élément filtrant 4 est interposé de manière étanche entre l'espace annulaire 21 de la zone d'amont Z1 et l'espace intérieur 9 qui communique seulement avec l'orifice de sortie 3b, comme illustré sur la figure 1.

En référence à présent aux figures 3, 4 et 6, on peut voir dans cet exemple que la pièce annulaire 24 a une forme de dôme et s'étend entre un grand bord annulaire B1 raccordé à la cuve 25 et un petit bord annulaire B2 qui délimite un passage pour le raccord externe 28. Ici, le raccord externe 28 est en effet distinct de la pièce annulaire 24 à travers laquelle il est inséré. Une collerette 28c formée sur la périphérie du corps tubulaire 28a permet de limiter le déplacement axial, du raccord externe 28 par rapport à la pièce annulaire 24. Grace à cette retenue, la connexion étanche entre l'extrémité 281 et la paroi supérieure PS du réservoir 13 est préservée vis-à-vis des efforts qui s'exercent au moment de l'insertion ou du retrait de l'embout de connexion 35. Bien entendu d'autres formes de fixation peuvent être utilisées pour maintenir le raccord externe 28 solidaire de l'enceinte d'additif E.

Pour la connexion de l'enceinte d'additif E à l'élément filtrant 4, parmi les options simples et fiables pour l'assemblage avec réduction de l'encombrement global, il est avantageux de réaliser un emboitement de l'extrémité de fixation 10. Cet emboitement est obtenu par exemple :
- avec une connexion, ici étanche, par contact et frottement entre la portion de surface 24a et la surface continue 7d du flasque proximal 7 ; et/ou
- avec encliquetage à l'aide de clips 24b qui font saillie radialement vers l'extérieur depuis une surface périphérique de l'extrémité de fixation 10, les clips 24b étant engagés au-delà d'une ou plusieurs butées 8b appartenant à l'élément filtrant 4.

Dans l'exemple non limitatif des figures 4 et 6, l'enceinte d'additif E est montée inséparable de l'élément filtrant 4 par emboitement dans l'espace intérieur de l'extrémité de fixation 10. Les clips 24b s'opposent au retrait de l'extrémité de fixation 10 du fait de la butée 8b formée à l'extrémité inférieure 8a de l'élément d'armature 8. Alternativement, ce type de butée peut être formé par au moins un rebord interne annulaire du flasque proximal 7.

Bien que ces figures montrent des clips 24b saillants agencés dans la pièce annulaire 24 entre la portion de surface annulaire 24a et la lèvre d'étanchéité 24d, d'autres possibilités de retenue peuvent être prévues, par exemple avec engagement de reliefs saillants du flasque proximal 7 dans des fenêtres formées dans l'extrémité de fixation 10.

Plus généralement, on comprend que l'extrémité de fixation 10 présente des moyens de fixation qui peuvent s'étendre au-delà de l'extrémité inférieure 5c du média filtrant pour permettre un raccordement de l'enceinte d'additif E sans encombrement additionnel dans le sens de la hauteur. On peut ainsi noter sur la figure 6 que la distance axiale H1 entre l'extrémité inférieure 5c du média filtrant 5 et la paroi supérieure PS du réservoir d'additif 13 peut être faible (inférieure à 10 mm par exemple) et typiquement inférieure ou égale à la hauteur H2 du flasque distal 6.

La commande de diffusion d'additif depuis le réservoir 13 de l'enceinte d'additif E jusqu'à l'orifice de distribution 34 va à présent être décrit en référence aux figures 1 et 5.

La tête de diffusion 32 comprend ici une électrovanne ou un dispositif actionneur 62 similaire permettant l'obturation totale ou partielle du canal de distribution DC. La tête de diffusion 32 comprend également un fourreau externe F de protection du dispositif actionneur 62. Ce fourreau F peut comporter aussi un conduit de communication 50 qui permet un remplissage du volume périphérique V3 en carburant. La pression de carburant dans le volume périphérique V3 est identique à la pression de carburant filtré qui circule dans le canal de carburant du couvercle 3 en amont du venturi 22, à la différence près de la perte de charge générée par la conception.

Dans l'exemple non limitatif de la figure 1, ce conduit de communication 50 est séparé de façon étanche du compartiment 64 dans lequel est logé l'électrovanne ou composant fonctionnel similaire. Ainsi le carburant ne pénètre ni autour de l'électrovanne ni dans le canal de distribution E1 qui forme par exemple un débouché du compartiment 64. Le canal de distribution DC est en partie formé par un tube qui est monté dans un support S3 placé entre le dispositif actionneur 62, ici l'électrovanne, et la partie d'obturation 30 du couvercle 3.

Pendant le fonctionnement du filtre 1, le carburant circule de manière continue entre les orifices 3a et 3b d'entrée et de sortie du carburant. Le venturi 22, qui constitue ici le moyen de génération de différence de pression, génère une dépression entre l'orifice 34 de distribution d'additif et l'orifice 3b de sortie de carburant. Comme l'enceinte d'additif E communique par le conduit 50 avec l'orifice 3b de sortie de carburant, le volume périphérique V3 est rempli de carburant à la même pression que le carburant circulant à l'orifice 3b de sortie de carburant. La paroi P du réservoir d'additif 13, qui constitue ici une paroi mobile et étanche, maintient une pression identique entre l'additif dans le réservoir d'additif 13 et le carburant dans le volume périphérique V3.

La pression dans le réservoir d'additif 13 est donc supérieure à la pression régnant au niveau de l'orifice 34 de distribution, ce qui contraint l'additif à se déplacer du réservoir 13 vers l'orifice 34 de distribution puis à se diffuser dans le carburant circulant dans le venturi 22 et donc dans le circuit de circulation de carburant C1. Le dispositif actionneur 62 permet d'empêcher totalement ou partiellement la circulation de l'additif. A titre d'exemple, une électrovanne permettant de stopper la distribution d'additif à l'arrêt du moteur est utilisée. Une électrovanne d'un type connu en soi peut être utilisée, avec un élément obturant adapté pour obturer le canal de distribution DC. On utilise par exemple un élément obturant conventionnel (non représenté) mobile dans le sens axial, parallèlement à l'axe longitudinal A. Le siège sur lequel vient en appui cet élément obturant, dans la position d'obturation, est généralement situé dans une zone de jonction entre deux tronçons du canal de distribution DC.

Dans cet exemple de réalisation, le dispositif actionneur 62 est illustré sous la forme d'un moyen électromécanique d'obturation totale ou partielle du canal de distribution DC de l'additif. L'utilisation d'un tel moyen est cependant facultatif et on pourra évidemment réaliser l'invention sans obturer le canal de distribution DC ou à l'aide d'autres moyens d'obturation du canal de distribution d'additif, par exemple un thermoclapet, un clapet « parapluie », un clapet anti-retour ou un clapet à commande hydraulique.

Par ailleurs, dans un exemple non limitatif, l'additif peut être chauffé avant l'injection dans le circuit C1 de circulation de carburant. Selon une option préférée, l'additif qui sort du réservoir 13 est chauffé avant son passage dans le canal de distribution DC. Un organe à surface chauffante peut ainsi être placé à proximité ou dans la première extrémité axiale 32a. Il est permis de chauffer l'additif à une température comprise par exemple entre 30 et 60°C. Un des avantages lié au réchauffage de l'additif est de permettre sa diffusion au travers du canal de distribution DC à une température sensiblement constante, et donc à une viscosité constante. Lorsque le canal de distribution DC est formé par un capillaire (de diamètre très faible), le fait d'éviter des variations de la viscosité de l'additif permet de contrôler avec précision le volume d'additif injecté. Un tel chauffage est utile en particulier pour compenser des variations de viscosité dues à un chauffage local non contrôlé par le dispositif actionneur 62.

Afin d'optimiser l'échange de calories (minimiser les pertes thermiques et l'apport en énergie dédié au chauffage), on préfère chauffer l'additif à proximité de l'entrée du canal de distribution DC plutôt que l'additif contenu dans le réservoir 13.

Dans un mode de réalisation, la tête de diffusion 32 peut présenter un dispositif de chauffage (non représenté), par exemple électrique, pourvu d'un connecteur qui est accessible extérieurement sur le couvercle 3 ou partie de boîtier analogue. Un fil de liaison, par exemple noyé dans la paroi latérale de la tête de diffusion 32, peut permettre de faire la liaison entre le connecteur et l'organe à surface chauffante du dispositif de chauffage. L'organe à surface chauffante peut être porté par une plaque ou composant analogue de circuit électronique. Dans ce cas, la surface chauffante est typiquement formée par un ou plusieurs éléments chauffants PTC (Coefficient de Température Positif).

Alternativement, le chauffage au niveau de la première extrémité axiale 32a peut résulter d'un chauffage du carburant qui traverse ensuite le média filtrant 5 et peut passer dans un canal qui traverse et/ou entoure la première extrémité axiale 32a. Plus généralement, on comprend que l'additif peut être chauffé en amont de l'orifice de distribution 34, de préférence entre l'embout de connexion 35 et une entrée du canal de distribution DC.

Dans des variantes de réalisation du module d'additif, le volume périphérique V3 peut être rempli en carburant de la zone d'amont Z1 ou le réservoir d'additif 13 peut être soumis à une pression d'un autre fluide et/ou issue d'un générateur de pression.

Un des avantages de l'invention réside dans la possibilité d'une réutilisation des deux parties du boîtier (2, 3) externe, de sorte que la cartouche filtrante CC présente un moindre coût et une plus grande flexibilité est offerte pour la fixation au véhicule. L'assemblage de la cartouche CC est en outre aisé, en utilisant éventuellement une extrémité de fixation propre à un couple donné d'élément filtrant (4) et module d'additif, dont les propriétés (durée d'utilisation notamment) sont compatibles.

Le mode d'assemblage de l'élément filtrant 4 avec l'enceinte d'additif E peut permettre d'éviter le contact avec la sortie du réservoir d'additif 13. L'assemblage est en outre ergonomique pour limiter l'encombrement en hauteur du filtre 1, du fait de la possibilité d'emboiter la partie de fixation 10 dans l'espace intérieur 9 de l'élément filtrant 4. Dans l'exemple non limitatif des figures, il n'y a pas besoin de joint intercalaire entre la cartouche filtrante CC et le boîtier (2, 3), ce qui limite le nombre de pièces à manipuler lors de la mise en place ou le démontage de la cartouche CC. On comprend que cela n'exclut pas des options alternatives avec un joint intercalaire pouvant être changé lors d'une rechange de la cartouche CC.

Un autre avantage réside dans l'utilisation d'un réservoir 13 souple pouvant se contracter pleinement et se refermer sur lui-même du fait de la possibilité pour la paroi P, initialement conformée en bol, de se rapprocher sans entrave de la paroi supérieure PS (au fur et à mesure que l'additif liquide est diffusé dans le circuit C1). Bien entendu, le réservoir 13 peut se présenter avec une géométrie différente d'une poche simple arrondie par le dessous et l'exemple des figures est seulement donné à titre d'illustration.

Le dispositif de l'invention permet de véhiculer tout type d'additif contenu dans un carburant. Ces additifs peuvent être classés en deux catégories : d'une part ceux qui ont une fonction catalytique d'aide à la régénération des filtres à particules (FAP), habituellement dénommés Fuel Borne Catalyst (FBC) et d'autre part ceux qui ont une fonction autre qu'une fonction catalytique.

Les additifs peuvent être sous forme liquide ou solide.

Les additifs FBC peuvent se présenter sous la forme d'un sel ou d'un complexe organométallique ou d'un mélange de ces sels ou complexes, solubles ou dispersibles dans le carburant. Ils peuvent aussi se présenter sous forme d'une dispersion colloïdale. Les colloïdes de cette dispersion peuvent être notamment à base d'un composé d'une terre rare et/ou d'un métal choisi dans les groupes IIA, IVA, VIIA, VIII, IB, IIB, IIIB et IVB de la classification périodique.

Ils peuvent être plus particulièrement à base de composés du cérium et/ou du fer.

La classification périodique des éléments à laquelle il est fait référence est celle publiée dans le Supplément au Bulletin de la Société Chimique de France n° 1 (janvier 1966).

On peut aussi utiliser des dispersions colloïdales qui comprennent des compositions détergentes.

Comme exemple de dispersions colloïdales on peut mentionner celles décrites dans les demandes de brevets EP 671205, WO 97/19022, WO 01/10545 et WO 03/053560, ces deux dernières décrivant notamment des dispersions à base de composés de cérium et de fer respectivement, ces dispersions contenant en outre un agent amphiphile.

Les demandes WO 2012/084838 et WO 2012/084851 décrivent par ailleurs des dispersions de fer sous forme cristallisée qui peuvent aussi être utilisées.

On peut aussi mentionner les demandes WO 2010/150040, WO 2012/084906 et WO 2012/097937 qui décrivent des dispersions colloïdales à base d'un composé du fer, d'un agent amphiphile et d'une composition détergente comprenant un sel d'ammonium quaternaire.

D'autres types d'additifs connus, différents des FBC et qui ont une fonction autre qu'une fonction catalytique, peuvent également être injectés dans le circuit à carburant. Ces additifs permettent l'amélioration de la distribution du carburant dans le moteur et/ou l'amélioration des performances du fonctionnement du moteur et/ou encore l'amélioration de la stabilité du fonctionnement du moteur.

On peut citer à titre d'exemple les additifs antimousse, les additifs dégivrants, les additifs polymériques réduisant la température à laquelle le carburant se trouble ou se fige, les additifs favorisant l'écoulement.

Des additifs inhibiteurs de corrosion peuvent également être utilisés.

Des additifs d'amélioration des performances de fonctionnement des moteurs peuvent aussi être mis en œuvre, comme les additifs procétane, les additifs prooctane, les additifs inhibiteurs de fumée, les additifs réduisant les pertes par friction appelés additifs FM pour « Friction Modifier » ou additifs « d'extrême pression ».

Des additifs détergents, destinés à limiter tout dépôt au niveau des injecteurs, peuvent également être utilisés.

Des additifs d'amélioration du pouvoir lubrifiant peuvent également être utilisés pour éviter l'usure ou le grippage des pompes à haute pression notamment et des injecteurs, le pouvoir lubrifiant des carburants étant lui médiocre.

Des additifs d'amélioration de la stabilité de fonctionnement des moteurs peuvent être envisagés. Les additifs de type antioxydants, stabilisateurs, désactivateurs de métaux visant à neutraliser les effets catalytiques de certains métaux; des additifs dispersants visant à disperser les particules formées et prévenir l'agglomération de particules assez grosses peuvent également être mis en œuvre.

Selon un mode de réalisation particulier, l'additif est une combinaison d'un additif détergent et d'un additif de lubrification, et éventuellement d'un additif inhibiteur de corrosion.

L'additif de type FBC associé à un additif de performance carburant de type détergent comme décrit plus haut (demande de brevet WO 2010/150040) est particulièrement avantageux dans le cas d'un véhicule équipé d'un filtre à particules.

Dans ce même cas, on aura avantage également à associer à un additif de type FBC plusieurs additifs de performance carburant, notamment lorsque le véhicule est commercialisé dans une zone géographique où le carburant est de qualité variable et/ou médiocre.

Dans le cas d'un véhiculé non équipé d'un filtre à particules, différents types d'associations d'additifs peuvent être envisagés comme celle associant un ou plusieurs détergents à un additif de lubrification et à un inhibiteur de corrosion.

Il doit être évident pour les personnes versées dans l'art que la présente invention permet des modes de réalisation sous de nombreuses autres formes spécifiques sans l'éloigner du domaine d'application de l'invention comme revendiqué. En particulier, bien que la description mentionne quelques exemples pour la réalisation des zones d'étanchéité, l'homme du métier peut apprécier que toute autre forme de réalisation permettant d'obtenir une étanchéité annulaire convient pour la zone d'étanchéité entre l'élément filtrant 4 et le couvercle 3 (idem pour une zone d'étanchéité entre l'élément filtrant 4 et l'enceinte d'additif E).

De plus, il doit être compris que la différence de pression n'est pas forcément générée par un phénomène de dépression, par exemple par un venturi 22 (sachant que l'utilisation d'un diaphragme est une alternative au venturi 22), et peut aussi résulter de la création d'une surpression qui s'exerce sur la face externe d'au moins une paroi P du réservoir d'additif 13. On comprend aussi que le moyen de génération de différence de pression peut être l'élément filtrant 4, la portion d'obturation 30 pouvant dans ce cas être dépourvue de venturi et le conduit de communication 50 formé dans la partie d'insertion 31 peut être supprimé.

## Revendications

1. Cartouche filtrante (CC), adaptée pour coopérer dans un filtre à carburant (1) avec tout ou partie d'un boîtier de filtre, la cartouche filtrante comprenant :
- un élément filtrant (4) comportant une première extrémité, une deuxième extrémité et un média filtrant (5) sensiblement annulaire s'étendant entre la première extrémité et la deuxième extrémité, le média filtrant (5) ayant une face interne (5b) qui délimite un espace intérieur (9) où circule du carburant filtré ;
- un module d'additif comportant :
- un réservoir d'additif liquide (13) adapté pour être soumis à une pression de carburant filtré par le média filtrant (5) et qui délimite un volume interne (V2) variable, le réservoir (13) présentant une paroi souple et étanche (P) rendant le réservoir déformable, de sorte à maintenir une pression identique entre l'additif liquide contenu dans le volume interne (V2) et ledit carburant filtré,
- un conduit de sortie d'additif liquide (12a), l'additif liquide étant adapté pour être mélangé avec le carburant filtré et circulant dans un circuit (C1) de circulation de carburant pour moteur à combustion interne,
**caractérisée en ce que** le module d'additif comprend une extrémité de fixation (10) en contact avec l'élément filtrant (4) dans un état assemblé de la cartouche filtrante (CC), sachant que la deuxième extrémité de l'élément filtrant (4) est en prise avec ladite extrémité de fixation (10) de façon à superposer et/ou emboîter l'élément filtrant (4) et le module d'additif, ce grâce à quoi l'élément filtrant (4) et le module d'additif définissent une unité adaptée pour être insérée d'un seul tenant et de manière amovible à l'intérieur d'un boîtier (2, 3) de filtre à carburant, **et en ce que** le module d'additif comporte un raccord externe (28) auto-obturant conçu et agencé pour évacuer de l'additif liquide hors du module, dans un état assemblé de la cartouche lorsque le raccord externe (28) est dans un état d'engagement étanche avec un embout de connexion complémentaire appartenant à une conduite qui est externe à la cartouche filtrante (CC) et qui est introduite dans l'espace intérieur (9) au travers de la première extrémité de l'élément filtrant (4), le raccord (28) externe comprenant le conduit de sortie d'additif liquide (12a) pour délimiter une ouverture d'évacuation du liquide additif dans ledit état d'engagement du raccord externe (28) et présentant des moyens d'obturation (36) pour fermer automatiquement de manière étanche le conduit de sortie d'additif liquide (12a) dans un état désengagé du raccord externe (28), l'extrémité de fixation (10) étant pourvue dudit raccord externe,
sachant que le raccord externe (28) s'étend longitudinalement entre une première extrémité (281) où le conduit de sortie d'additif liquide (12a) débouche dans le volume interne (V2) du réservoir d'additif (13) et une deuxième extrémité (282) où le conduit de sortie d'additif (12a) débouche dans l'espace intérieur (9) délimité par le média filtrant (5).

2. Cartouche filtrante selon la revendication 1,dans laquelle l'élément filtrant (4) s'étend entre un premier flasque (6) formant la première extrémité de l'élément filtrant et un deuxième flasque (7) formant la deuxième extrémité de l'élément filtrant, les moyens d'obturation étant actionnables par poussée depuis l'extérieur au travers d'une ouverture (60) du premier flasque (6) pour obtenir une position d'ouverture des moyens d'obturation.

3. Cartouche filtrante selon la revendication 1 ou 2, dans laquelle :
le module d'additif consiste en une enceinte d'additif (E) qui comprend :
- une enveloppe externe (12) délimitant autour du réservoir d'additif (13) un volume périphérique (V3) et qui présente au moins un orifice de passage (O1) de carburant de façon à faire pénétrer du carburant dans le volume périphérique (V3),
- ledit réservoir d'additif qui s'étend à l'intérieur de l'enveloppe externe (12) et présente ladite paroi souple et étanche (P), mobile pour permettre de faire varier le volume interne (V2),
le conduit de sortie d'additif liquide (12a) est distinct de l'orifice de passage (O1) de carburant et s'étend dans ou à proximité de l'espace intérieur (9) en traversant l'extrémité de fixation (10).

4. Cartouche filtrante selon la revendication 3, dans laquelle l'orifice de passage de carburant (O1) débouche dans ledit espace intérieur (9).

5. Cartouche filtrante selon la revendication 3 ou 4, dans laquelle la deuxième extrémité de l'élément filtrant (4) comprend un flasque (7) proximal par rapport à l'enceinte d'additif (E), l'extrémité de fixation (10) de l'enceinte d'additif (E) étant retenue par le flasque proximal (7) et/ou par un élément d'armature (8) de l'élément filtrant (4) qui s'étend dans l'espace intérieur (9).

6. Cartouche filtrante selon la revendication 5, dans laquelle l'extrémité de fixation (10) de l'enceinte d'additif (E) comprend une pièce annulaire (24) qui s'étend autour du conduit de sortie d'additif liquide (12a), la retenue étant réalisée par emboitement de ladite extrémité de fixation (10) dans l'espace intérieur (9) avec engagement de la pièce annulaire (24) contre ou au-delà d'une butée (8b) appartenant à l'élément filtrant (4).

7. Cartouche filtrante selon la revendication 6, dans laquelle l'enveloppe externe (12) de l'enceinte d'additif (E) est obtenue par liaison étanche de la pièce annulaire (24) sur une cuve (25) et présente une unique ouverture définie par le raccord externe (28), ladite pièce annulaire (24) ayant une forme de dôme et comprenant :
- un grand bord annulaire (B1) raccordé à la cuve (25) ;
- au moins un petit bord annulaire (B2) qui délimite un passage pour le raccord externe (28) lorsque le raccord externe est distinct de la pièce annulaire (24) et inséré au travers de la pièce annulaire.

8. Cartouche filtrante selon l'une quelconque des revendications 5 à 7, dans laquelle le flasque proximal (7) est de préférence monobloc et comprend :
- une portion radiale (7c) qui recouvre une extrémité axiale (5c) du média filtrant (5), la portion radiale (7c) ayant un format annulaire et délimitant une ouverture (70) traversée par le raccord externe (28) ; et
- une portion d'extension distincte de la portion radiale (7c), présentant une surface annulaire (7d) de guidage et/ou d'étanchéité en contact avec une portion de surface annulaire (24a) de ladite extrémité de fixation (10).

9. Cartouche filtrante selon la revendication 3 ou 4, dans laquelle la deuxième extrémité de l'élément filtrant (4) comporte un flasque qui forme une partie de l'enveloppe externe (12) et est relié de façon étanche à une cuve (25) de l'enceinte d'additif (E).

10. Cartouche filtrante selon l'une quelconque des revendications 3 à 9, dans laquelle le raccord externe (28) comprend :
- un corps rigide (28a) réalisé d'une pièce et définissant le conduit de sortie d'additif liquide (12a) ; et
- au moins un organe mobile tel qu'un clapet (37) placé dans le conduit de sortie d'additif liquide (12a) et en contact avec ledit corps rigide ;
sachant que le réservoir d'additif (13) comporte une paroi (PS) réalisée d'une pièce qui comprend ledit corps rigide.

11. Cartouche filtrante selon l'une quelconque des revendications précédentes, dans laquelle les moyens d'obturation (36) comprennent un clapet d'obturation (37), qui est sollicité par défaut dans une position de fermeture par un organe de rappel élastique (38).

12. Cartouche filtrante selon la revendication 11, dans laquelle le clapet d'obturation (37) est sollicité par défaut dans la position de fermeture par un ressort.

13. Cartouche filtrante selon la revendication 5, 6, 7 ou 8, dans laquelle l'élément filtrant (4) présente un flasque additionnel distal (6) par rapport à l'enceinte d'additif et formant une extrémité de cartouche, l'enceinte d'additif (E) comprenant un fond (25a) rigide situé à l'opposé de ladite extrémité de cartouche, l'orifice de passage de carburant (O1) et la deuxième extrémité (282) du raccord externe (28) étant agencés dans l'enceinte d'additif (E) à l'opposé dudit fond (25a) et plus près du flasque proximal (7) que du flasque distal (6).

14. Cartouche filtrante selon la revendication 13, dans laquelle ledit flasque distal (6) présente une ouverture centrale (60) ayant un première diamètre interne (D1), le flasque proximal (7) présentant une ouverture centrale (70) ayant un deuxième diamètre interne (D2), l'enceinte d'additif (E) définissant un diamètre externe maximal (D3) tel que :
0,5 ≤ D1/D3 ≤ 1 et 0,5 ≤ D2/D3 ≤ 1

15. Filtre à carburant (1) comprenant la cartouche filtrante (CC) telle que définie dans l'une quelconque des revendications 1 à 14, et comprenant un boîtier (2, 3) pour loger ladite cartouche filtrante (CC), le boîtier comprenant :
- au moins un orifice d'entrée de carburant (3a) ;
- au moins un orifice de sortie de carburant (3b) ;
- un orifice (34) de distribution de l'additif liquide dans un circuit (C1) de circulation de carburant pour moteur à combustion interne, l'orifice (34) de distribution d'additif étant distinct des orifices d'entrée et de sortie de carburant (3a, 3b) ; et
- une tête de diffusion (32) qui comporte ledit orifice (34) de distribution pour diffuser l'additif dans le circuit (C1) de circulation de carburant, un embout de connexion (35) adapté pour s'engager avec le raccord externe (28), et un canal de distribution (DC) permettant de faire circuler l'additif liquide de l'embout de connexion (35) vers l'orifice (34) de distribution, l'embout de connexion (35) coopérant avec les moyens d'obturation (36) de manière à ce que le canal de distribution (DC) communique avec le réservoir d'additif (13) dans un état engagé de l'embout de connexion (35) avec le raccord externe (28).

16. Filtre à carburant selon la revendication 15, dans lequel le boîtier est réalisé par assemblage d'un couvercle (3) qui comprend la tête de diffusion (32) avec un bol (2), la tête de diffusion (32) étant destinée à être montée avec le couvercle (3), de préférence de manière permanente sur le circuit (1) de circulation de carburant, ledit couvercle (3) comportant l'orifice d'entrée et l'orifice de sortie de carburant (3a, 3b), ladite cartouche (CC) étant montée de manière amovible sur le couvercle (3), ledit canal de distribution (DC) s'étendant dans l'espace intérieur (9) délimité par le média filtrant (5).

17. Filtre à carburant selon la revendication 15 ou 16, dans lequel l'élément filtrant (4) est interposé de façon étanche entre une zone d'amont (Z1) autour de la cartouche filtrante (CC) qui communique avec l'orifice d'entrée de carburant (3a) et une zone d'aval (Z2) qui inclut l'espace intérieur (9) délimité par le média filtrant (5) et communique avec l'orifice de sortie de carburant (3b), l'extrémité de fixation (10) du module étant en contact étanche radial contre une portion de surface (7d) annulaire du flasque proximal (7), à distance du raccord externe (28).

18. Filtre à carburant selon l'une quelconque des revendications 15 à 17, comportant :
- un moyen (22) de génération de différence de pression entre l'orifice d'entrée (3a) ou de sortie de carburant (3b) et l'orifice (34) de distribution d'additif, et
- un dispositif (62) d'obturation sélective totale ou partielle du canal de distribution (DC), engagé dans l'espace intérieur (9) délimité par le média filtrant (5).

19. Filtre à carburant selon l'une quelconque des revendications 15 à 18, comportant au moins un dispositif de chauffage configuré pour chauffer l'additif en amont de l'orifice (34) de distribution.

## Patentansprüche

1. Filterpatrone (CC), die dazu ausgebildet ist, in einem Kraftstoff-Filter (1) mit einem gesamten Filtergehäuse oder einem Teil davon zusammenzuwirken, wobei die Filterpatrone umfasst:
- ein Filterelement (4) mit einem ersten Ende, einem zweiten Ende und einem im Wesentlichen ringförmigen Filtermedium (5), das sich zwischen dem ersten Ende und dem zweiten Ende erstreckt, wobei das Filtermedium (5) eine Innenfläche (5b) aufweist, die einen Innenraum (9) begrenzt, wo gefilterter Kraftstoff strömt;
- ein Additiv-Modul, umfassend:
- ein Reservoir (13) für flüssiges Additiv, das dazu ausgebildet ist, einem Druck des durch das Filtermedium (5) gefilterten Kraftstoffs ausgesetzt zu werden, und das ein variables Innenvolumen (V2) begrenzt, wobei das Reservoir (13) eine flexible und dichte Wand (P) aufweist, welche das Reservoir verformbar macht, so dass ein identischer Druck zwischen dem im Innenvolumen (V2) enthaltenen flüssigen Additiv und dem gefilterten Kraftstoff aufrechterhalten wird;
- eine Auslass-Leitung für das flüssige Additiv (12a), wobei das flüssige Additiv dazu ausgebildet ist, mit dem Kraftstoff gemischt zu werden, der gefiltert ist/wird und in einem Verbrennungsmotor-Kraftstoffströmungskreislauf (C1) strömt;
**dadurch gekennzeichnet, dass** das Additiv-Modul ein Befestigungsende (10) aufweist, das mit dem Filterelement (4) in einem zusammengebauten Zustand der Filterpatrone (CC) in Kontakt steht, wobei das zweite Ende des Filterelements (4) mit dem Befestigungsende (10) in Eingriff steht, um das Filterelement (4) und das Additiv-Modul zusammenzufügen oder/und einander zu überlagern, wodurch das Filterelement (4) und das Additiv-Modul eine Einheit definieren, die dazu ausgebildet ist, zusammenhängend und in entfernbarer Weise in das Innere eines Gehäuses (2, 3) des Kraftstofffilters eingesetzt zu werden,
**und dadurch, dass** das Additiv-Modul einen externen, selbstverschließenden Anschluss (28) umfasst, der dazu ausgebildet und angeordnet ist, in einem zusammengebauten Zustand der Patrone das flüssige Additiv aus dem Modul abzulassen, wenn der externe Anschluss (28) sich in einem dichten Eingriffszustand mit einem komplementären Verbindungsendstück befindet, das zu einer Leitung gehört, die extern für die Filterpatrone (CC) ist, und die in den Innenraum (9) durch das erste Ende des Filterelements (4) eingesetzt wird, wobei der externe Anschluss (28) die Auslass-Leitung für das flüssige Additiv (12a) umfasst, um eine Ablass-Öffnung für das flüssige Additiv in dem Eingriffszustand des externen Anschlusses (28) zu begrenzen, und Verschlussmittel (36) umfasst, um automatisch in dichter Weise die Auslass-Leitung für das flüssige Additiv (12a) in einem gelösten Zustand des externen Anschlusses (28) zu schließen, wobei das Befestigungsende (10) mit dem externen Anschluss versehen ist,
wobei sich der externe Anschluss (28) longitudinal zwischen einem ersten Ende (281), wo die Auslass-Leitung für das flüssige Additiv (12a) in das Innenvolumen (V2) des Additiv-Reservoirs (13) mündet, und einem zweiten Ende (282) erstreckt, wo die Auslass-Leitung für das flüssige Additiv (12a) in den durch das Filtermedium (5) begrenzten Innenraum (9) mündet.

2. Filterpatrone nach Anspruch 1, wobei das Filterelement (4) sich zwischen einem ersten Flansch (6), der das erste Ende des Filterelements bildet, und einem zweiten Flansch (7) erstreckt, der das zweite Ende des Filterelements bildet, wobei die Verschlussmittel durch Schub von außen durch eine Öffnung (60) des ersten Flansches (6) hindurch betätigbar sind, um eine Öffnungsposition der Verschlussmittel zu erhalten.

3. Filterpatrone nach Anspruch 1 oder 2, wobei das Additiv-Modul aus einer Additivkammer (E) besteht, die umfasst:
- eine Außenhülle (12), die um das Additiv-Reservoir (13) herum ein Umfangsvolumen (V3) begrenzt und die mindestens eine Kraftstoff-Durchgangsöffnung (O1) aufweist, um den Kraftstoff in das Umfangsvolumen (V3) eindringen zu lassen;
- das Additiv-Reservoir, welches sich im Inneren der Außenhülle (12) erstreckt und die flexible und dichte Wand (P) aufweist, die beweglich ist, um das Innenvolumen (V2) variieren zu können,
wobei die Auslass-Leitung für das flüssige Additiv (12a) von der Kraftstoff-Durchgangsöffnung (O1) verschieden ist und sich in dem Innenraum (9) oder in der Nähe davon erstreckt, während sie das Befestigungsende (10) durchquert.

4. Filterpatrone nach Anspruch 3, wobei die Kraftstoff-Durchgangsöffnung (O1) in den Innenraum (9) mündet.

5. Filterpatrone nach Anspruch 3 oder 4, wobei das zweite Ende des Filterelements (4) einen bezüglich der Additivkammer (E) proximalen Flansch (7) umfasst, wobei das Befestigungsende (10) der Additivkammer (E) durch den proximalen Flansch (7) oder/und ein Gestell-Element (8) des Filterelements (4) zurückgehalten wird, das sich in den Innenraum (9) erstreckt.

6. Filterpatrone nach Anspruch 5, wobei das Befestigungsende (10) der Additivkammer (E) ein ringförmiges Teil (24) umfasst, das sich um die Auslass-Leitung für das flüssige Additiv (12a) herum erstreckt, wobei das Zurückhalten dadurch erreicht wird, dass das Befestigungsende (10) in den Innenraum (9) eingesetzt wird, mit Eingriff des ringförmigen Teils (24) an einem oder jenseits von einem zum Filterelement (4) gehörenden Anschlag (8b).

7. Filterpatrone nach Anspruch 6, wobei die Außenhülle (12) der Additivkammer (E) durch dichtes Anschließen des ringförmigen Teils (24) an einen Behälter (25) erhalten wird und eine einzige Öffnung aufweist, die durch den externen Anschluss (28) definiert ist, wobei das ringförmige Teil (24) eine Kuppelform aufweist und umfasst:
- eine große Ringkante (B1), die mit dem Behälter (25) verbunden ist;
- wenigstens eine kleine Ringkante (B2), die einen Durchgang für den externen Anschluss (28) definiert, wenn der externe Anschluss vom ringförmigen Teil (24) separat und durch das ringförmige Teil hindurch eingesetzt ist.

8. Filterpatrone nach einem der Ansprüche 5 bis 7, wobei der proximale Flansch (7) vorzugsweise einstückig ausgebildet ist und umfasst:
- einen radialen Abschnitt (7c), der ein axiales Ende (5c) des Filtermediums (5) bedeckt, wobei der radiale Abschnitt (7c) ein ringförmiges Format aufweist und eine Öffnung (70) begrenzt, durch welche der externe Anschluss (28) verläuft; und
- einen von dem radialen Abschnitt (7c) separaten Verlängerungsabschnitt mit einer ringförmigen Oberfläche (7d) zum Führen und/oder Abdichten in Kontakt mit einem Abschnitt der ringförmigen Oberfläche (24a) des Befestigungsendes (10).

9. Filterpatrone nach Anspruch 3 oder 4, wobei das zweite Ende des Filterelements (4) einen Flansch umfasst, der einen Teil der Außenhülle (12) bildet und dicht mit einem Behälter (25) der Additivkammer (E) verbunden ist.

10. Filterpatrone nach einem der Ansprüche 3 bis 9, wobei der externe Anschluss (28) umfasst:
- einen starren Körper (28a), der aus einem Stück gefertigt ist und die Auslass-Leitung für flüssiges Additiv (12a) definiert; und
- wenigstens ein bewegliches Element, beispielsweise ein Ventil (37), das in der Auslassleitung für flüssiges Additiv (12a) und in Kontakt mit dem starren Körper positioniert ist;
wobei das Additiv-Reservoir (13) eine Wand (PS) umfasst, die aus einem Stück besteht und den starren Körper umfasst.

11. Filterpatrone nach einem der vorhergehenden Ansprüche, wobei die Verschlussmittel (36) ein Verschluss-Ventil (37) umfassen, das defaultmäßig durch ein elastisches Rückstellelement (38) in eine Verschlussposition vorgespannt ist.

12. Filterpatrone nach Anspruch 11, wobei das Verschluss-Ventil (37) durch eine Feder defaultmäßig in die Verschlussposition vorgespannt ist.

13. Filterpatrone nach dem Anspruch 5, 6, 7 oder 8, wobei das Filterelement (4) einen zusätzlichen, bezüglich der Additivkammer distalen Flansch (6) aufweist, der ein Ende der Patrone bildet, wobei die Additivkammer (E) einen starren Boden (25a) umfasst, der gegenüber dem Ende der Patrone angeordnet ist, wobei die Kraftstoff-Durchgangsöffnung (O1) und das zweite Ende (282) des externen Anschlusses (28) in der Additivkammer (E) gegenüber dem Boden (25a) und näher am proximalen Flansch (7) als am distalen Flansch (6) angeordnet sind.

14. Filterpatrone nach Anspruch 13, wobei der distale Flansch (6) eine zentrale Öffnung (60) mit einem ersten Innendurchmesser (D1) aufweist, wobei der proximale Flansch (7) eine zentrale Öffnung (70) mit einem zweiten Innendurchmesser (D2) aufweist, wobei die Additivkammer (E) einen maximalen Außendurchmesser (D3) definiert, so dass:
0,5 ≤ D1/D3 ≤ 1 und 0,5 ≤ D2/D3 ≤ 1.

15. Kraftstofffilter (1), umfassend die Filterpatrone (CC) wie in einem der Ansprüche 1 bis 14 definiert und umfassend ein Gehäuse (2, 3) zum Unterbringen der Filterpatrone (CC), wobei das Gehäuse umfasst:
- wenigstens eine Kraftstoff-Einlassöffnung (3a);
- wenigstens eine Kraftstoff-Auslassöffnung (3b);
- eine Verteilungsöffnung (34) zum Verteilen des flüssigen Additivs in einen Verbrennungsmotor-Kraftstoffströmungskreislauf (C1), wobei die Verteilungsöffnung (34) für das Additiv von den Kraftstoff-Einlass- und -Auslassöffnungen (3a, 3b) separat ist; und
- einen Verteilerkopf (32), umfassend die Verteilungsöffnung (34) zum Verteilen des Additivs im Kraftstoffströmungskreislauf (C1), ein Verbindungsendstück (35), das dazu angepasst ist, mit dem externen Anschluss (28) in Eingriff zu treten, und einen Verteilungskanal (DC), der es erlaubt, das flüssige Additiv von dem Verbindungsendstück (35) zur Verteilungsöffnung (34) strömen zu lassen, wobei das Verbindungsendstück (35) mit den Verschlussmitteln (36) zusammenwirkt, so dass der Verteilungskanal (DC) mit dem Additiv-Reservoir (13) in Verbindung steht, in einem Zustand, in dem das Verbindungsendstück (35) mit dem externen Anschluss (28) in Eingriff steht.

16. Kraftstofffilter nach Anspruch 15, wobei das Gehäuse durch Zusammenfügen einer Abdeckung (3), die den Verteilerkopf (32) umfasst, mit einer Schüssel (2) ausgeführt ist, wobei der Verteilerkopf (32) dazu bestimmt ist, mit der Abdeckung (3), vorzugsweise dauerhaft, an/auf dem Kraftstoffströmungskreislauf (1) angebracht zu werden, wobei die Abdeckung (3) die Kraftstoff-Einlassöffnung und die Kraftstoff-Auslassöffnung (3a, 3b) aufweist, wobei die Patrone (CC) entfernbar an der Abdeckung (3) angebracht ist; wobei sich der Verteilungskanal (DC) in den durch das Filtermedium (5) begrenzten Innenraum (9) erstreckt.

17. Kraftstofffilter nach Anspruch 15 oder 16, wobei das Filterelement (4) in dichter Weise zwischen einer stromaufwärtigen Zone (Z1) um die Filterpatrone (CC) herum, die mit der Kraftstoff-Einlassöffnung (3a) in Verbindung steht, und einer stromabwärtigen Zone (Z2) angeordnet ist, die den durch das Filtermedium (5) begrenzten Innenraum (9) enthält und mit der Kraftstoff-Auslassöffnung (3b) in Verbindung steht, wobei das Befestigungsende (10) des Moduls in dichtem radialen Kontakt mit einem ringförmigen Oberflächenabschnitt (7d) des proximalen Flansches (7) steht, mit Abstand von dem externen Anschluss (28).

18. Kraftstofffilter nach einem der Ansprüche 15 bis 17, umfassend:
- ein Mittel (22) zur Erzeugung einer Druckdifferenz zwischen der Kraftstoff-Einlassöffnung (3a) oder der Kraftstoff-Auslassöffnung (3b) und der Verteilungsöffnung (34) für das Additiv und
- eine Vorrichtung (62) zum selektiven, vollständigen oder teilweisen Verschließen des Verteilungskanals (DC), in Eingriff in den durch das Filtermedium (5) begrenzten Innenraum (9).

19. Kraftstofffilter nach einem der Ansprüche 15 bis 18, umfassend mindestens eine Heizeinrichtung, die dazu konfiguriert ist, das Additiv stromaufwärts von der Verteilungsöffnung (34) zu erwärmen.

## Claims

1. Filter cartridge (CC) suitable for engaging in a fuel filter (1), with all or part of a filter housing, said filter cartridge comprising:
- a filter element (4) comprising a first end, a second end, and a substantially annular filter medium (5) extending between the first end and the second end, the filter medium (5) having an inner face (5b) that delimits an inner space (9) where filtered fuel circulates;
- an additive module comprising:
- a liquid additive tank (13) suitable for being brought to a fuel pressure of fuel filtered by the filter medium (5) and which delimits a variable internal volume (V2), the tank (13) having a flexible fluidtight wall (P) making the tank deformable, whereby an identical pressure is maintained between the liquid additive contained in the internal volume (V2) and said filtered fuel,
- a liquid additive outlet pipe (12a), the liquid additive being suitable for mixing with the filtered fuel flowing in a fuel circulation circuit (C1) for an internal combustion engine,
**characterized in that** the additive module comprises an attachment end (10) in contact with the filter element (4) in an assembled state of the filter cartridge (CC), the second end of the filter element (4) being engaged with said attachment end (10) so as to stack and/or nest the filter element (4) and the additive module, whereby the filter element (4) and the additive module define a unit adapted for integral insertion, removably, into a fuel filter housing (2, 3),
**and in that** the additive module comprises a self-sealing external connection (28) designed and arranged to discharge liquid additive from the module in assembled state of the cartridge when the external connection (28) is in a state of sealing engagement with a complementary connecting endpiece belonging to a line which is external to the filter cartridge (CC) and which is introduced into the inner space (9) through the first end of the filter element (4), the external connection (28) comprising the additive liquid outlet pipe (12a) for delimiting a liquid additive discharge opening in said engagement state of the external connection (28) and having sealing means (36) for automatically closing the liquid additive outlet pipe (12a) in a fluidtight manner when the external connection (28) is in a disengaged state, the attachment end (10) being provided with said external connection, wherein the external connection (28) extends longitudinally between a first end (281) where the liquid additive outlet pipe (12a) opens into the internal volume (V2) of the additive tank (13) and a second end (282) where the liquid additive outlet pipe (12a) opens into the inner space (9) delimited by the filter medium (5).

2. Filter cartridge according to claim 1, wherein the filter element (4) extends between a first flange (6) forming the first end of the filter element and a second flange (7) forming the second end of the filter element, the sealing means being adapted to be actuated by external thrust through an opening (60) in the first flange (6) to obtain an open position of the sealing means.

3. Filter cartridge according to claim 1 or 2, wherein:
the additive module consists of an additive chamber (E) which comprises:
- an outer casing (12), defining a peripheral volume (V3) around the additive tank (13) and having at least one fuel port (O1) allowing fuel to enter the peripheral volume (V3),
- said additive tank, which extends inside the outer casing (12) and has at least one flexible fluidtight portion (P) such as a movable wall to allow the internal volume (V2) to vary,
the liquid additive outlet pipe (12a) being distinct from the fuel port (O1) and extending within or adjacent to the inner space (9) by traversing the attachment end (10).

4. Filter cartridge according to claim 3, wherein the fuel port (O1) opens into said inner space (9).

5. Filter cartridge according to claim 3 or 4, wherein the second end of the filter element (4) comprises a flange (7) that is proximal relative to the additive chamber (E), the attachment end (10) of the additive chamber (E) being retained by this proximal flange (7) and/or by a reinforcing member (8) of the filter element (4) which extends in the inner space (9).

6. Filter cartridge according to claim 5, wherein the attachment end (10) of the additive chamber (E) comprises an annular part (24) which extends around the liquid additive outlet pipe (12a), retention being achieved by nested insertion of said attachment end (10) into the inner space (9) with engagement of the annular part (24) against or beyond an abutment (8b) that is part of the filter element (4).

7. Filter cartridge according to claim 6, wherein the outer casing (12) of the additive chamber (E) is obtained by fluidtight connection of the annular part (24) to a vessel (25) and provides a single opening defined by the external connection (28), said annular part (24) having a dome shape and comprising:
- a large annular edge (B1) connected to the vessel (25);
- at least one small annular edge (B2) defining a passage for the external connection (28) when the external connection is separate from the annular part (24) and is inserted through the annular part.

8. Filter cartridge according to any one of claims 5 to 7, wherein the proximal flange (7) is preferably a single piece and comprises:
- a radial portion (7c) which covers an axial end (5c) of the filter medium (5), the radial portion (7c) having an annular form and defining an opening (70) traversed by the external connection (28); and
- an extension portion distinct from the radial portion (7c), having an annular guiding and/or sealing surface (7d) in contact with an annular surface portion (24a) of said attachment end (10).

9. Filter cartridge according to claim 3 or 4, wherein the second end of the filter element (4) comprises a flange which forms part of the outer casing (12) and is sealingly connected to a vessel (25) of the additive chamber (E).

10. Filter cartridge according to any one of claims 3 to 9, wherein the external connection (28) comprises:
- a rigid body (28a) formed as a single piece and defining the liquid additive outlet pipe (12a); and
- at least one movable member such as a valve (37) placed in the liquid additive outlet pipe (12a) and in contact with said rigid body;
the additive tank (13) comprising a wall (PS) formed as a single piece which includes said rigid body.

11. Filter cartridge according to any preceding claim, wherein the sealing means (36) comprise a shutter valve (37) which is urged by default into a closed position by a resilient biasing member (38).

12. Filter cartridge according to claim 11, wherein the shutter valve (37) is urged by default into the closed position by a spring.

13. Filter cartridge according to claim 5, 6, 7 or 8, wherein the filter element (4) has an additional flange (6) that is distal relative to the additive chamber and forms a cartridge end, the additive chamber (E) comprising a rigid base (25a) located opposite said cartridge end, the fuel port (O1) and the second end (282) of the external connection (28) being arranged in the additive chamber (E) so as to be opposite said base (25a) and closer to the proximal flange (7) than to the distal flange (6).

14. Filter cartridge according to claim 13, wherein said distal flange (6) has a central opening (60) having a first inner diameter (D1), the proximal flange (7) has a central opening (70) having a second inner diameter (D2), and the additive chamber (E) defines a maximum outer diameter (D3) such that:
0.5 ≤ D1/D3 ≤ 1 and 0.5 ≤ D2/D3 ≤ 1

15. Fuel filter (1) comprising the filter cartridge (CC) as defined in any one of claims 1 to 14, and comprising a housing (2, 3) for accommodating said filter cartridge (CC), the housing comprising:
- at least one fuel inlet port (3a);
- at least one fuel outlet port (3b);
- a port (34) for dispensing liquid additive into a fuel circulation circuit (C1) for an internal combustion engine, the additive dispensing port (34) being distinct from the fuel inlet and outlet ports (3a, 3b); and
- a dispensing head (32) which comprises said dispensing port (34) for releasing additive into the fuel circulation circuit (C1), a connecting endpiece (35) adapted to engage with the external connection (28), and a distribution channel (DC) for circulating the liquid additive from the connecting endpiece (35) to the dispensing port (34), the connecting endpiece (35) engaging with the sealing means (36) so that the distribution channel (DC) is in communication with the additive tank (13) when the connecting endpiece (35) is in an engaged state with the external connection (28).

16. Fuel filter according to claim 15, wherein the housing is formed by assembling a cover (3) comprising the dispensing head (32) with a bowl (2), the dispensing head (32) being intended for assembly with the cover (3), preferably permanently affixed to the fuel circulation circuit (1), said cover (3) comprising the fuel inlet port and outlet port (3a, 3b), said cartridge (CC) being removably mounted on the cover (3), said distribution channel (DC) extending into the inner space (9) delimited by the filter medium (5).

17. Fuel filter according to claim 15 or 16, wherein the filter element (4) is sealingly interposed between an upstream area (Z1) around the filter cartridge (CC), which is in communication with the fuel inlet port (3a), and a downstream area (Z2) which includes the inner space (9) delimited by the filter medium (5) and is in communication with the fuel outlet port (3b), the attachment end (10) of the module being in radial sealing contact against an annular surface portion (7d) of the proximal flange (7), at a distance from the external connection (28).

18. Fuel filter according to any one of claims 15 to 17, comprising:
- a means (22) for generating a pressure difference between the fuel inlet (3a) or outlet (3b) port and the additive dispensing port (34), and
- a device (62) for selectively sealing, totally or partially, the distribution channel (DC), engaged in the inner space (9) delimited by the filter medium (5).

19. Fuel filter according to any one of claims 15 to 18, comprising at least one heating device configured to heat the additive upstream of the dispensing port (34) .
